(19) Europäisches Patentamt
European Patent Office
Office européen des brevets

(11) **EP 4 753 165 A1**

(12) **EUROPEAN PATENT APPLICATION**
published in accordance with Art. 153(4) EPC

(43) Date of publication:
**03.06.2026 Bulletin 2026/23**

(21) Application number: **24844705.4**

(22) Date of filing: **19.07.2024**

(51) International Patent Classification (IPC):
***H04B 7/0456*** (2017.01)

(52) Cooperative Patent Classification (CPC):
**H04B 7/0456; H04B 17/309; H04L 5/00**

(86) International application number:
**PCT/CN2024/106329**

(87) International publication number:
**WO 2025/021013 (30.01.2025 Gazette 2025/05)**

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**GE KH MA MD TN**

(30) Priority: **26.07.2023 CN 202310927752**

(71) Applicant: **Apogee 5G Global, LLC
Plano, TX 75024 (US)**

(72) Inventors:
• **WU, Keying
Shanghai 201206 (CN)**
• **ZHANG, Xiaobo
Shanghai 201206 (CN)**

(74) Representative: **Gunzelmann, Rainer
Wuesthoff & Wuesthoff
Patentanwälte und Rechtsanwalt PartG mbB
Schweigerstraße 2
81541 München (DE)**

(54) **METHOD USED IN NODE FOR WIRELESS COMMUNICATION, AND APPARATUS**

(57) Disclosed in the present application are a method used in a node for wireless communication, and an apparatus. The method comprises: a first node receiving an RS in a first RS resource set; and sending first CSI and second CSI. wherein at least one matrix depends on the first CSI and the second CSI, the at least one matrix being used for precoding, and the first CSI and the second CSI both depend on channel measurements obtained on the basis of the first RS resource set, the first CSI being based on a codebook, and the second CSI conforming to at least one of the following: channel parameters recovered by a target receiver of the second CSI on the basis of the second CSI is unknown to the first node; a generator used for generating the second CSI is obtained on the basis of training; and the second CSI does not belong to CSI defined by 3GPPR17 or CSI defined by a previous version of 3GPPR17. The method increases the CSI accuracy, reduces reporting overheads, and enhances the overall system performance.

FIG.1

**Description**

**Technical Field**

The present application relates to a transmission method and apparatus in a wireless communication system, in particular to a solution and apparatus related to Channel Status Information (CSI) in the wireless communication system.

**Background Art**

A multi-antenna technology is a key technology in a 3rd Generation Partner Project (3GPP) Long-term Evolution (LTE) system and a New Radio (NR) system. An additional spatial degree of freedom is obtained by configuring a plurality of antennas at a communication node, such as a base station or User Equipment (UE). The plurality of antennas, through beamforming, form beams pointing to a specific direction to improve communication quality. The degree of freedom provided by a multi-antenna system can be used for improving transmission reliability and/or throughput. When the plurality of antennas belong to a plurality of Transmitter Receiver Points (TRPs)/panels, additional diversity gains can be obtained by using spatial differences between different TRPs/panels. The UE reporting Channel State Information (CSI) to assist a network device in multi-antenna operation, beamforming, etc. is a common means in 3GPP. With the increase in the number of antennas and the enhancement of requirements for system performance, traditional CSI feedback modes have brought significant amount of redundant overheads. Therefore, in NR Release (R) 18, Artificial Intelligence (AI)- or Machine Learning (ML)-based CSI compression is initiated as a project.

**Summary of the Invention**

In New Radio (NR) Release (R) 18, CSI reports need to satisfy higher requirements (for example, but not limited to a plurality of TRPs/panels, channel prediction, medium/high-speed mobile UE, more flexible duplex or full-duplex modes, etc.). Through research, the applicant has found that the existing CSI solutions cannot satisfy the above requirements. It should be noted that although many embodiments in the present application are designed for higher-demand CSI and AI/ML, the present application is also applicable to other solutions, such as traditional CSI. In addition, the use of a unified solution for different scenarios (including but not limited to higher-demand CSI, AI/ML-based CSI and traditional CSI) is also conducive to reducing hardware complexity and cost. In the absence of conflicts, embodiments and features in the embodiments in a first node of the present application can be applied to a second node, and vice versa. In the absence of conflicts, the embodiments and features in the embodiments of the present application can be arbitrarily combined with each other.

As one embodiment, interpretations of terminologies in the present application refer to definitions in 3GPP specification protocol TS38 series.

The present application discloses a method used in a first node for wireless communication, characterized by comprising:

receiving an RS in a first RS resource set; and
sending first CSI and second CSI, wherein at least one matrix depends on the first CSI and the second CSI, and the at least one matrix is used for precoding, wherein the first CSI and the second CSI both depend on channel measurements obtained on the basis of the first RS resource set, the first CSI is based on a codebook, and the second CSI conforms to at least one of the following:

channel parameters recovered by a target receiver of the second CSI on the basis of the second CSI are unknown to the first node;
a generator used for generating the second CSI is obtained on the basis of training; and
the second CSI does not belong to CSI defined by 3GPP R17 or CSI defined by a previous release of 3GPP R17.

As one embodiment, a problem to be solved by the present application comprises: how to enhance CSI; and in the above method, the at least one matrix depends on the first CSI and the second CSI, which solves this problem.

As one embodiment, benefits of the above method comprise: increasing the CSI accuracy, reducing report overheads, and enhancing the overall system performance.

As one embodiment, the benefits of the above method comprise: ensuring that a sender and a recipient of the first CSI and the second CSI have consensus on at least part of information of the at least one matrix, thereby increasing the CSI accuracy.

As one embodiment, the benefits of the above method comprise: having good backward compatibility and reducing the implementation complexity.

As one embodiment, the benefits of the above method comprise: better flexibility and adaptability to different terminals.

According to an aspect of the present application, it is characterized in that the first CSI is based on a Type II codebook.

As one embodiment, characteristics of the above method comprise: generating a portion of information of a precoding matrix using a Type II codebook-based method, and generating another portion of information of the precoding matrix using an artificial intelligence- or machine learning-based method.

As one embodiment, the benefits of the above method comprise: increasing the CSI accuracy and/or reducing report overheads, and enhancing the overall system performance.

As one embodiment, the benefits of the above method comprise: fully utilizing the CSI report capabilities provided by existing standards, and simplifying the design of artificial intelligence- or machine learning-based CSI.

According to an aspect of the present application, it is characterized in that L vectors depend on the first CSI, V coefficient sets depend on the second CSI, and the at least one matrix depends on the L vectors and the V coefficient sets; and L is a positive integer greater than 1, L is configurable, and V is a positive integer.

As one embodiment, the benefits of the above method comprise: utilizing the design of the Type II codebook in 3GPP R15, and providing better backward compatibility.

According to an aspect of the present application, it is characterized in that V vector groups depend on at least one of the first CSI and the second CSI, and V is a positive integer; each vector group of the V vector groups comprises a plurality of vectors, and a number of vectors comprised in each vector group of the V vector groups is configurable; and the at least one matrix depends on the V vector groups.

As one embodiment, the benefits of the above method comprise: utilizing the design of the Type II codebook in 3GPP R16, and further reducing the report overheads.

According to an aspect of the present application, it is characterized in that a first vector group set depends on at least one of the first CSI and the second CSI, a number of vector groups in the first vector group set is equal to V, and V is a positive integer; the number of vectors comprised in each vector group in the first vector group set is equal to Q, Q is configurable and Q is a positive integer; and the at least one matrix depends on the first vector group set.

As one embodiment, the benefits of the above method comprise: better supporting CSI for medium/-high-speed UE.

According to an aspect of the present application, it is characterized in that the second CSI depends on a first encoder, and the first encoder is obtained on the basis of training.

As one embodiment, the characteristics of the above method comprise: the second CSI is generated using an artificial intelligence- or machine learning-based method.

As one embodiment, the benefits of the above method comprise: increasing the CSI accuracy and/or reducing report overheads.

According to one aspect of the present application, it is characterized by comprising:

receiving first signaling, wherein the first signaling triggers a single CSI report of a first report configuration,

wherein the first CSI and the second CSI both depend on the first report configuration.

As one embodiment, the benefits of the above method comprise: good backward compatibility.

As one embodiment, the benefits of the above method comprise: more flexible configuration.

According to an aspect of the present application, it is characterized in that the first node is user equipment.

According to an aspect of the present application, it is characterized in that the first node is a relay node.

The present application discloses a method for a second node used for wireless communication, characterized by comprising:

sending an RS in a first RS resource set; and receiving first CSI and second CSI, wherein at least one matrix depends on the first CSI and the second CSI, and the at least one matrix is used for precoding, wherein the first CSI and the second CSI both depend on channel measurements obtained on the basis of the first RS resource set, the first CSI is based on a codebook, and the second CSI conforms to at least one of the following:

channel parameters recovered by the second node on the basis of the second CSI are unknown to a sender of the second CSI;
a generator used for generating the second CSI is obtained on the basis of training; and
the second CSI does not belong to CSI defined by 3GPP R17 or CSI defined by a previous release of 3GPP R17.

According to an aspect of the present application, it is characterized in that the first CSI is based on a Type II codebook.

According to an aspect of the present application, it is characterized in that L vectors depend on the first CSI, V coefficient sets depend on the second CSI, and the at least one matrix depends on the L vectors and the V coefficient sets; and L is a positive integer greater than 1, L is configurable, and V is a positive integer.

According to an aspect of the present application, it is characterized in that V vector groups depend on at least one of the first CSI and the second CSI, and V is a positive integer; each vector group of the V vector groups comprises a plurality of vectors, and a number of vectors comprised in each vector group of the V vector groups is configurable; and the at least one matrix depends on the V vector groups.

According to an aspect of the present application, it is characterized in that a first vector group set depends on at least one of the first CSI and the second CSI, a number of vector groups in the first vector group set is equal to V, and V is a positive integer; the number of vectors comprised in each vector group in the first vector group set is equal to Q, Q is configurable and Q is a positive integer; and the at least one matrix depends on the first vector group set.

According to an aspect of the present application, it is characterized in that the second CSI depends on a first encoder, and the first encoder is obtained on the basis of training.

According to one aspect of the present application, it is characterized by comprising:

sending first signaling, wherein the first signaling triggers a single CSI report of a first report configuration,

wherein the first CSI and the second CSI both depend on the first report configuration.

According to an aspect of the present application, it is characterized in that the second node is a base station.

According to an aspect of the present application, it is characterized in that the second node is user equipment.

According to an aspect of the present application, it is characterized in that the second node is a relay node.

The present application discloses a first node used for wireless communication, characterized by comprising:

a first receiver receiving an RS in a first RS resource set; and

a first transmitter sending first CSI and second CSI, wherein at least one matrix depends on the first CSI and the second CSI, and the at least one matrix is used for precoding,

wherein the first CSI and the second CSI both depend on channel measurements obtained on the basis of the first RS resource set, the first CSI is based on a codebook, and the second CSI conforms to at least one of the following:

channel parameters recovered by a target receiver of the second CSI on the basis of the second CSI are unknown to the first node;

a generator used for generating the second CSI is obtained on the basis of training; and

the second CSI does not belong to CSI defined by 3GPP R17 or CSI defined by a previous release of 3GPP R17.

The present application discloses a second node used for wireless communication, characterized by comprising:

a second transmitter sending an RS in a first RS resource set; and

a second receiver receiving first CSI and second CSI, wherein at least one matrix depends on the first CSI and the second CSI, and the at least one matrix is used for precoding,

wherein the first CSI and the second CSI both depend on channel measurements obtained on the basis of the first RS resource set, the first CSI is based on a codebook, and the second CSI conforms to at least one of the following:

channel parameters recovered by the second node on the basis of the second CSI are unknown to a sender of the second CSI;

a generator used for generating the second CSI is obtained on the basis of training; and

the second CSI does not belong to CSI defined by 3GPP R17 or CSI defined by a previous release of 3GPP R17.

As one embodiment, compared with the traditional solution, the present application has the following advantages:

increasing the CSI accuracy, reducing report overheads, and enhancing the overall system performance;

achieving a good balance between the CSI accuracy and the report overheads;

having good backward compatibility;

reducing the implementation complexity; and

better flexibility and adaptability to different terminals.

**Brief Description of the Drawings**

Other features, purposes and advantages of the present application will become more apparent by reading the detailed description of non-limiting embodiments with reference to the following drawings:

FIG. 1 shows a flow chart of a first RS resource set, first CSI and second CSI according to one embodiment of the present application;

FIG. 2 shows a schematic diagram of a network architecture according to one embodiment of the present application;

FIG. 3 shows a schematic diagram of an embodiment of a wireless protocol architecture for a user plane and a control plane according to one embodiment of the present application;

FIG. 4 shows a schematic diagram of a first communication device and a second communication device according to one embodiment of the present application;

FIG. 5 shows transmission between a first node and a second node according to one embodiment of the present application;

FIG. 6 shows a schematic diagram of first CSI being based on a Type II codebook according to one embodiment of the present application;

FIG. 7 shows a schematic diagram of at least one matrix, L vectors and coefficient sets according to one embodiment of the present application;

FIG. 8 shows a schematic diagram of at least one matrix and V vector groups according to one embodiment of the present application;

FIG. 9 shows a schematic diagram of at least one matrix and a first vector group set according to one embodiment of the present application;

FIG. 10 shows a schematic diagram of at least one matrix according to one embodiment of the present application;

FIG. 11 shows a schematic diagram of at least one matrix according to one embodiment of the present application;

FIG. 12 shows a schematic diagram of at least one matrix according to one embodiment of the present application;

FIG. 13 shows a schematic diagram of at least one matrix according to one embodiment of the present application;

FIG. 14 shows a schematic diagram of second CSI depending on a first encoder according to one embodiment of the present application;

FIG. 15 shows a schematic diagram of a first decoder according to one embodiment of the present application;

FIG. 16 shows a schematic diagram of an artificial intelligence- or machine learning-based processing system according to one embodiment of the present application;

FIG. 17 shows a schematic diagram of first signaling, a first report configuration, first CSI and second CSI according to one embodiment of the present application;

FIG. 18 shows a structural block diagram of a processing apparatus used in a first node according to one embodiment of the present application; and

FIG. 19 shows a structural block diagram of a processing apparatus used in a second node according to one embodiment of the present application.

**Detailed Description of Embodiments**

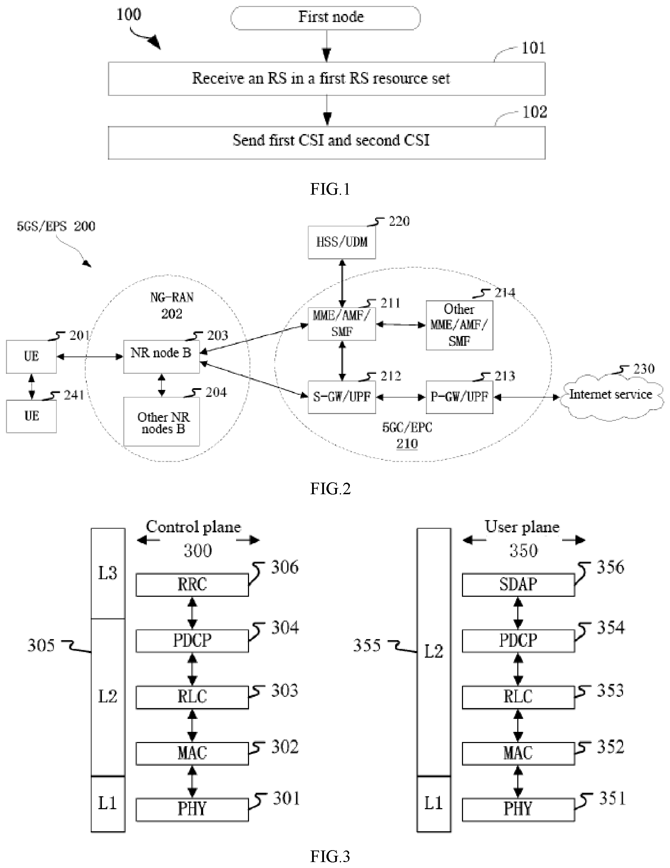

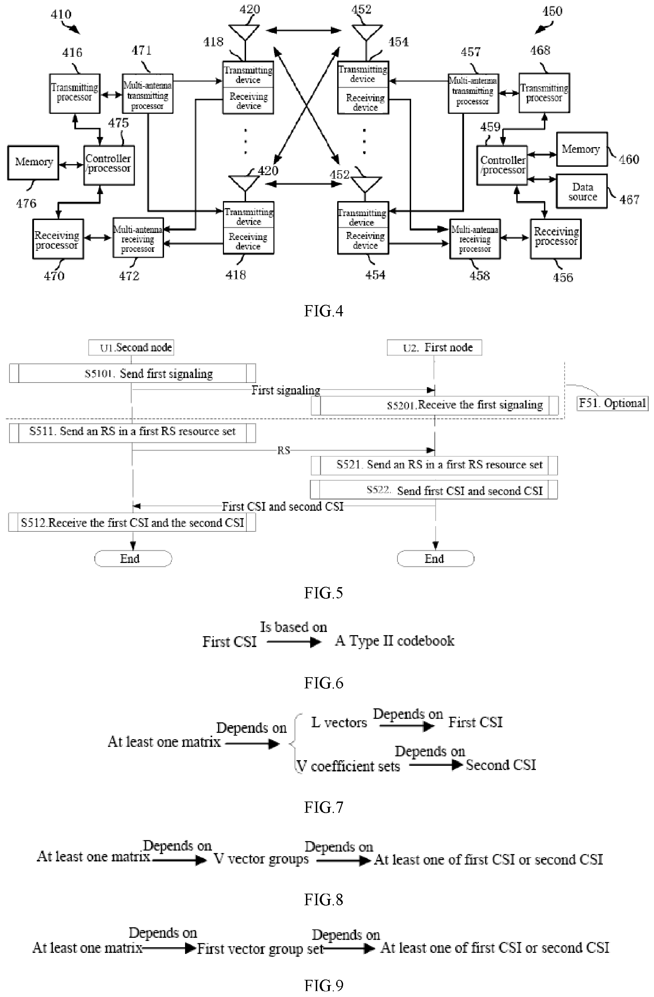

The technical solutions of the present application will be further described in detail below in conjunction with drawings. It should be noted that, in the absence of conflicts, embodiments and features in the embodiments in the present application can be arbitrarily combined with each other. Based on considerations of performance, flexibility, complexity, overheads, compatibility and the like, those skilled in the art are motivated to flexibly combine the embodiments in different drawings without conflict, for example, but not limited to, the embodiment in FIG. 1 with the embodiments in FIG. 5 to FIG. 19, the embodiment in FIG. 5 with the embodiments in FIG. 6 to FIG. 19, and the like.

**Embodiment 1**

Embodiment 1 illustrates a flow chart of a first RS resource set, first CSI and second CSI according to one embodiment of the present application, as shown in FIG. 1. In 100 shown in FIG. 1, each block represents one step. In particular, the order of the steps in blocks does not represent a specific temporal order relationship among the steps.

In Embodiment 1, a first node in the present application receives an RS in the first RS resource set in step 101, and sends the first CSI and the second CSI in step 102. Among them, at least one matrix depends on the first CSI and the second CSI, and the at least one matrix is used for precoding; and the first CSI and the second CSI both depend on channel measurements obtained on the basis of the first RS resource set, the first CSI is based on a codebook, and the second CSI conforms to at least one of the following:

channel parameters recovered by a target receiver of the second CSI on the basis of the second CSI are unknown to the first node;

a generator used for generating the second CSI is obtained on the basis of training; and

the second CSI does not belong to CSI defined by 3GPP R17 or CSI defined by a previous release of 3GPP R17.

As one embodiment, the first RS resource set comprises at least one RS resource.

As one embodiment, the first RS resource set is one Channel State Information Reference Signal (CSI-RS) resource set.

As one embodiment, the first RS resource set is one Non-Zero-Power (NZP) CSI-RS resource set.

As one embodiment, the first RS resource set is identified by one NZP-CSI-RS-ResourceSetId.

As one embodiment, the first RS resource set is configured by one NZP-CSI-RS-ResourceSet IE.

As one embodiment, the first RS resource set comprises a plurality of NZP CSI-RS resource sets.

As one embodiment, the first RS resource set comprises all or part of NZP CSI-RS resources in each NZP CSI-RS resource set in the plurality of NZP CSI-RS resource sets.

As one embodiment, each RS resource in the first RS resource set is one CSI-RS resource.

As one embodiment, each RS resource in the first RS resource set is one NZP CSI-RS resource.

As one embodiment, each RS resource in the first RS resource set is configured by one NZP-CSI-RS-Resource IE.

As one embodiment, each RS resource in the first RS resource set is identified by one NZP-CSI-RS-ResourceId.

As one embodiment, the first RS resource set is one CSI-SSB resource set.

As one embodiment, the first RS resource set is configured by one CSI-SSB-ResourceSet IE.

As one embodiment, the first RS resource set is identified by one CSI-SSB-ResourceSetId.

As one embodiment, each RS resource in the first RS resource set is one Synchronisation Signal/Physical Broadcast Channel (SS/PBCH) block resource.

As one embodiment, each RS resource in the first RS resource set is identified by one SSB-Index.

As one embodiment, the first RS resource set comprises at least one CSI-SSB resource set.

As one embodiment, the first RS resource set comprises at least one CSI-SSB resource set and at least one NZP CSI-RS resource set.

As one embodiment, any RS resource in the first RS resource set is one CSI-RS resource or SS/PBCH block resource.

As one embodiment, the first RS resource set is identified by one CSI-ResourceConfigId.

As one embodiment, each RS resource in the first RS resource set comprises at least one port.

As one embodiment, the port comprises an antenna port.

As one embodiment, the port comprises a CSI-RS port.

As one embodiment, the port comprises an antenna port or a CSI-RS port.

As one embodiment, all RS resources in the first RS resource set belong to the same cell.

As one embodiment, two RS resources in the first RS resource set belong to different cells.

As one embodiment, all RS resources in the first RS resource set belong to the same Bandwidth Part (BWP).

As one embodiment, two RS resources in the first RS resource set belong to different BWPs.

As one embodiment, the first RS resource set only comprises one RS resource.

As one embodiment, benefits of the above method comprise: having good backward compatibility, reducing report overheads and simplifying UE processing.

As one embodiment, the first RS resource set comprises a plurality of RS resources.

As one sub-embodiment of the above embodiment, the plurality of RS resources have the same number of ports.

As one sub-embodiment of the above embodiment, ports with the same index for the plurality of RS resources are the same port.

As one embodiment, the benefits of the above method comprise: good forward compatibility, and better support for enhanced CSI, for example, but not limited to channel prediction, CSI for medium/high-speed UE, CSI for a plurality of TRPs, CSI for coherent joint transmission of a plurality of TRPs, etc.

As one embodiment, the first CSI comprises a Precoding Matrix Indicator (PMI).

As one embodiment, the first CSI comprises a codebook-based PMI.

As one embodiment, the first CSI being based on a codebook refers to: a PMI comprised in the first CSI is a codebook-based PMI.

As one embodiment, the first CSI being based on a codebook refers to: the first CSI comprises all or part of information of the codebook-based PMI.

As one embodiment, the first CSI being based on a codebook refers to: the first CSI comprises part of information of the codebook-based PMI.

As one embodiment, the first CSI only comprises a PMI.

As one embodiment, the first CSI only comprises all or part of information in the codebook-based PMI.

As one embodiment, the first CSI only comprises part of information in the codebook-based PMI.

As one embodiment, the first CSI comprises all or part of information in the codebook-based PMI, and also comprises one or more of a Channel Quality Indicator (CQI), a CSI-RS Resource Indicator (CRI), a Layer Indicator (LI), or a Rank Indicator (RI).

As one embodiment, the first CSI is based on a Type II codebook.

As one embodiment, the first CSI is based on a Type I codebook.

As one embodiment, the codebook refers to a codebook defined in 3GPP NR Release (R) 15, R16, or R17.

As one embodiment, the codebook refers to a PMI codebook defined in 3GPP NR R15, R16, or R17.

As one embodiment, a PMI comprised in the first CSI is generated in accordance with a PMI codebook defined in 3GPP NR R15, R16, or R17.

As one embodiment, the first CSI comprises part of a PMI generated in accordance with a PMI codebook defined in 3GPP NR R15, R16, or R17.

As one embodiment, the first CSI is linear.

As one embodiment, the second CSI comprises information of at least one channel matrix.

As one embodiment, the second CSI comprises amplitude and phase information of elements in at least one channel matrix.

As one embodiment, the second CSI comprises information of at least one eigenvector.

As one embodiment, the second CSI comprises amplitude and phase information of elements in at least one eigenvector.

As one embodiment, the second CSI comprises part of matrix information obtained by matrix decomposition of at least one channel matrix.

As one embodiment, the second CSI comprises information after projecting at least one channel matrix onto at least one basis matrix.

As one embodiment, the second CSI is not based on a codebook.

As one embodiment, the second CSI is nonlinear.

As one embodiment, the second CSI is generated on the basis of an artificial intelligence- or machine learning-based method.

As one embodiment, characteristics of the above method comprise: generating the first CSI using a codebook-based method, generating the second CSI using an artificial intelligence- or machine learning-based method, and generating a precoding matrix using the first CSI and the second CSI.

As one embodiment, the benefits of the above method comprise: not only obtaining the benefits of the codebook-based CSI to enable the first node and a second node to reach a consensus on part of CSI of a report, but also obtaining the advantages of artificial intelligence- or machine learning-based CSI to increase the CSI report accuracy and/or reduce report overheads, thereby enhancing the overall system performance.

As one embodiment, the benefits of the above method comprise: reducing the implementation complexity, having better flexibility and adapting to different terminals.

As one embodiment, the second CSI comprises artificial intelligence- or machine learning-based CSI.

As one embodiment, the second CSI comprises compressed CSI.

As one embodiment, the second CSI comprises neural network-based CSI.

As one embodiment, the second CSI comprises Conventional Neural Network (CNN)-based CSI.

As one embodiment, the second CSI conforms to the following: the channel parameters recovered by the target receiver of the second CSI on the basis of the second CSI are unknown to the first node.

As one embodiment, the second CSI conforms to the following: channel parameters recovered by the first node on the basis of the second CSI are unknown to the target receiver of the second CSI.

As one embodiment, the second CSI conforms to the following: the generator used for generating the second CSI is obtained on the basis of training.

As one embodiment, the second CSI conforms to the following: the second CSI does not belong to CSI defined in 3GPP R17, or CSI defined by a previous release of 3GPP R17.

As one embodiment, the second CSI conforms to the following: the channel parameters recovered by the target receiver of the second CSI on the basis of the second CSI are unknown to the first node; the generator used for generating the second CSI is obtained on the basis of training; and the second CSI does not belong to CSI defined by 3GPP R17 or CSI defined by a previous release of 3GPP R17.

As one embodiment, the second CSI conforms to the following: the channel parameters recovered by the target receiver of the second CSI on the basis of the second CSI are unknown to the first node, and the generator used for generating the second CSI is obtained on the basis of training.

As one embodiment, the second CSI conforms to the following: the generator used for generating the second CSI is obtained on the basis of training, and the second CSI does not belong to CSI defined by 3GPP R17 or CSI defined by a previous release of 3GPP R17.

As one embodiment, the second CSI conforms to the following: the channel parameters recovered by the target receiver of the second CSI on the basis of the second CSI are unknown to the first node, the channel parameters recovered by the first node on the basis of the second CSI are unknown to the target receiver of the second CSI, the generator used for generating the second CSI is obtained on the basis of training; and the second CSI does not belong to CSI defined by 3GPP R17 or CSI defined by a previous release of 3GPP R17.

As one embodiment, the generator of the recovered channel parameters is obtained on the basis of training.

As one embodiment, the recovered channel parameters comprise a channel matrix.

As one embodiment, the recovered channel parameters comprise an original channel matrix.

As one embodiment, any element in the original channel matrix comprises information of a channel experienced by an RS transmitted on one port in the first RS resource set on one frequency unit.

As one sub-embodiment of the above embodiment, the frequency unit is one subband.

As one sub-embodiment of the above embodiment, the frequency unit is one Physical Resource Block (PRB).

As one sub-embodiment of the above embodiment, the frequency unit is composed of a plurality of consecutive PRBs.

As one sub-embodiment of the above embodiment, the frequency unit is one sub-carrier.

As one sub-embodiment of the above embodiment, the frequency unit is composed of a plurality of consecutive sub-carriers.

As one embodiment, the recovered channel parameters comprise a characteristic vector.

As one embodiment, the recovered channel parameters comprise a characteristic value.

As one embodiment, the recovered channel parameters comprise a precoding matrix.

As one embodiment, the recovered channel parameters comprise one or more of a relative phase, a relative amplitude, or a relative coefficient between at least two ports.

As one embodiment, a calculation of the second CSI is based on the first CSI.

As one embodiment, the second CSI is calculated on the basis of the condition of the first CSI.

As one embodiment, the first node obtains channel measurements for calculating the first CSI and the second CSI on the basis of the first RS resource set.

As one embodiment, the first node obtains channel measurements for calculating the first CSI and the second CSI only on the basis of the first RS resource set.

As one embodiment, the first node obtains channel measurements for calculating the first CSI and the second CSI on the basis of each RS resource in the first RS resource set.

As one embodiment, the first node obtains channel measurements for calculating the first CSI and the second CSI only on the basis of part of RS resources in the first RS resource set.

As one embodiment, the first CSI indicates part of the RS resources.

As one embodiment, the first CSI indicates part of the RS resources from the first RS resource set.

As one embodiment, the first CSI comprises a first bitmap, each bit in the first bitmap corresponds to one RS resource in the first RS resource set, and each bit in the first bitmap indicates whether an RS resource corresponding to the bit is one of part of the RS resources.

As one sub-embodiment of the above embodiment, for each bit in the first bitmap, if the bit is equal to 1, an RS resource corresponding to the bit is one of part of the RS resources; and if the bit is equal to 0, the RS resource corresponding to the bit does not belong to part of the RS resources.

As one embodiment, the first node obtains channel measurements for calculating the first CSI and the second CSI only on the basis of transmission occasions of CSI reference resources not later than the first CSI in the first RS resource set.

As one embodiment, the first node obtains channel measurements for calculating the first CSI on the basis of transmission occasions of CSI reference resources not later than the first CSI in the first RS resource set, and the first node obtains channel measurements for calculating the second CSI on the basis of transmission occasions of CSI reference resources not later than the second CSI in the first RS resource set; and time domain resources occupied by the CSI reference resources of the first CSI and the CSI reference resources of the second CSI do not overlap.

As one embodiment, the definitions of the CSI reference resources refer to 3GPP TS38.214.

As one embodiment, the first node obtains channel measurements for calculating the first CSI on the basis of each RS resource in the first RS resource set, and the first node obtains channel measurements for calculating the second CSI only on the basis of part of RS resources in the first RS resource set.

As one embodiment, only part of matrices of the at least one matrix depends on the first CSI and the second CSI.

As one embodiment, each matrix of the at least one matrix depends on the first CSI and the second CSI.

As one embodiment, the first CSI and the second CSI are used for determining the at least one matrix.

As one embodiment, the first CSI and the second CSI are used for generating the at least one matrix.

As one embodiment, the first CSI and the second CSI are used for generating each matrix of the at least one matrix.

As one embodiment, the first CSI and the second CSI carry information used for generating the at least one matrix.

As one embodiment, a target receiver of the first CSI and the second CSI can recover the at least one matrix from the first CSI and the second CSI.

As one embodiment, the target receiver of the first CSI and the second CSI can undoubtedly recover the at least one matrix from the first CSI and the second CSI.

As one embodiment, a target receiver of the first CSI is the target receiver of the second CSI.

As one embodiment, the first node can recover the at least one matrix from the first CSI and the second CSI.

As one embodiment, the first node can undoubtedly recover the at least one matrix from the first CSI and the second CSI.

As one embodiment, the at least one matrix recovered by the target receiver of the first CSI and the second CSI from the first CSI and the second CSI is unknown to the first node.

As one embodiment, the at least one matrix recovered by the first node from the first CSI and the second CSI is unknown to the target receiver of the first CSI and the second CSI.

As one embodiment, the at least one matrix comprises only one matrix.

As one embodiment, the at least one matrix comprises a plurality of matrices.

As one embodiment, each matrix of the at least one matrix is used for precoding.

As one embodiment, each matrix of the at least one matrix is one precoding matrix.

As one embodiment, the at least one matrix is used for generating at least one precoding matrix.

As one embodiment, the at least one matrix carries precoding information.

As one embodiment, the at least one matrix being used for precoding refers to: each matrix of the at least one matrix is one precoding matrix.

As one embodiment, the at least one matrix being used for precoding refers to: the at least one matrix is used for generating at least one precoding matrix.

As one embodiment, the at least one matrix being used for precoding refers to: the at least one matrix carries precoding information.

As one embodiment, frequency domain resources related to the at least one matrix are W subbands, and W is a positive integer.

As one embodiment, frequency domain resources related to the first CSI are the same as frequency domain resources related to the second CSI.

As one embodiment, frequency domain resources related to the first CSI are W subbands, frequency domain resources related to the second CSI are the W subbands, and W is a positive integer.

As one embodiment, the first CSI and the second CSI have the same CSI reference resource.

As one embodiment, the first CSI and the second CSI have different CSI reference resources.

As one embodiment, the W subbands are configured by a higher layer parameter.

As one embodiment, the W subbands are configured by a higher layer parameter 'reportFreqConfiguration'.

As one embodiment, the W subbands are configured by a higher layer parameter 'csi-ReportingBand'.

As one embodiment, W is equal to 1.

As one embodiment, W is greater than 1.

As one embodiment, the first CSI and the second CSI comprise CSI reported for all or part of subbands of the W subbands.

As one embodiment, the first CSI and the second CSI comprise CSI reported for each subband of the W subbands.

As one embodiment, one subband comprises one or more Physical Resource Blocks (PRBs) that are consecutive in a frequency domain.

As one embodiment, except for a subband located at an edge of a BWP, a number of PRBs comprised in other subbands is the same.

As one embodiment, except for a subband located at an edge of a BWP, the number of PRBs comprised in any subband is P1, and P1 is a positive integer greater than 1.

As one embodiment, P1 is a positive integer multiple of 4.

As one embodiment, P1 is indicated by higher layer signaling.

As one embodiment, P1 is correlated with the number of PRBs comprised in the BWP.

As one embodiment, the number of PRBs comprised in a starting subband in one BWP is P1- (Ns mod P1); and the number of PRBs comprised in a last subband in one BWP is (Ns + Nw) mod P1 or is P1, where Ns is an index of a starting PRB in the one BWP, and Nw is the number of PRBs comprised in the BWP.

As one embodiment, a sub-carrier spacing corresponding to one PRB or one subband is fixed.

As one embodiment, the sub-carrier spacing corresponding to one PRB or one subband varies with a frequency range to which the sub-carrier spacing belongs.

As one embodiment, any two matrices in the at least one matrix have the same number of rows and the same number of columns.

As one embodiment, a number of rows in one matrix of the at least one matrix is equal to a number of first ports.

As one embodiment, the number of rows in each matrix of the at least one matrix is equal to the number of first ports.

As one embodiment, the number of first ports is equal to a number of ports of one RS resource in the first RS resource set.

As one embodiment, the number of first ports is equal to a sum of a number of ports of all RS resources in a first RS resource occasion.

As one embodiment, the number of first ports is equal to a sum of a number of ports of part of RS resources in the first RS resource occasion.

As one embodiment, a number of columns of one matrix of the at least one matrix is equal to V, and V is a number of layers.

As one embodiment, the number of columns of each matrix of the at least one matrix is equal to V, and V is a number of layers.

As one embodiment, V columns of any matrix in the at least one matrix are precoding vectors for V layers, and V is a number of columns in the matrix.

As one embodiment, the number of layers refers to: a transmission rank.

As one embodiment, the layer refers to: a Multiple Input Multiple Output (MIMO) layer.

As one embodiment, the layer refers to: a transmission layer.

As one embodiment, the first CSI indicates V.

As one embodiment, a Rank Indicator (RI) comprised in the first CSI indicates V.

As one embodiment, V is configured by a higher layer parameter.

As one embodiment, V is equal to 1.

As one embodiment, V is greater than 1.

As one embodiment, a candidate for V is configured by a higher layer parameter.

As one embodiment, the candidate for V is configured by a higher layer parameter 'RI-Restriction or 'typeII-RI-Restriction'.

As one embodiment, the at least one matrix comprises W matrices, and the W matrices are respectively used for precoding the W subbands.

As one sub-embodiment of the above embodiment, the W matrices are precoding matrices for the W subbands respectively.

As one embodiment, the at least one matrix comprises N3 matrices, the N3 matrices are used for precoding for N3 PRB groups respectively, one PRB group comprises a plurality of consecutive PRBs, and N3 depends on W.

As one sub-embodiment of the above embodiment, the N3 matrices are precoding matrices for the N3 PRB groups respectively.

As one embodiment, each PRB group of the N3 PRB groups is composed of all or part of PRBs in one subband of the W subbands.

As one embodiment, N3 is not greater than a product of R and W, and R is configurable.

As one embodiment, N3 is equal to the product of R and W, or equal to the product of R and W minus 1, or equal to the product of R and W minus 2.

As one embodiment, R is equal to 1 or 2.

As one embodiment, R is configured by a higher layer parameter 'numberOfPMI-SubbandsPerCQI-Subband'.

As one embodiment, each PRB group of the N3 PRB groups is one PMI subband.

As one embodiment, N3 is a number of PMI subbands related to the first CSI and the second CSI.

As one embodiment, each subband of the W subbands is one CQI subband.

As one embodiment, except for the subband located at the edge of the BWP, each other subband in the W subbands comprises R PRB groups in the N3 PRB groups.

As one embodiment, except for a PRB group located at an edge of a BWP, the number of PRBs comprised in other PRB groups in the N3 PRB groups is the same.

As one embodiment, except for the PRB group located at the edge of the BWP, the number of PRBs comprised in other PRB groups in the N3 PRB groups is equal to P1 divided by R.

As one embodiment, when R is equal to 1, N3 is equal to W, and the N3 PRB groups are the W subbands respectively.

As one embodiment, when R is equal to 2, for each subband in the W subbands that is not located at the edge of the BWP, the first P1/2 PRBs and the last P1/2 PRBs in the subband form two PRB groups in the N3 PRB groups respectively.

As one embodiment, when R is equal to 2 and the W subbands comprise a first subband in one BWP, if $(Ns \bmod P1) \geq P1/2$, the first subband forms one PRB group in the N3 PRB groups; if $(Ns \bmod P1) < P1/2$, the first $P1/2-(N_s \bmod P1)$ PRBs and the last P1/2 PRBs in the first subband form two PRB groups in the N3 PRB groups; and Ns is the index of the starting PRB of the one BWP.

As one embodiment, when R is equal to 2 and the W subbands comprise a last subband in one BWP, if $1+(Ns+Nw-1) \bmod P1 \leq P1/2$, the last subband forms one PRB group in the N3 PRB groups; if $1+(Ns+Nw-1) \bmod P1 > P1/2$, the first P1/2 PRBs and the last $1+(Ns+Nw-1) \bmod P1 - P1/2$ PRBs in the last subband form two PRB groups in the N3 PRB groups respectively; and Ns is the index of the starting PRB of the one BWP, and Nw is the number of PRBs comprised in the BWP.

As one embodiment, PRBs in one subband or BWP are arranged in ascending order of PRB indexes (PRB number).

As one embodiment, the PRB index is $n_{PRB}$ in 3GPP TS 38.211.

As one embodiment, PRBs in one subband or BWP are arranged in order from low to high in frequency of occupied frequency domain resources.

As one embodiment, V columns of any matrix of the at least one matrix are precoding vectors for V layers of one PRB group respectively, and V is a number of columns of the matrix.

As one embodiment, the matrix in the present application comprises vectors.

As one embodiment, L vectors depend on at least one of the first CSI or the second CSI, L is a positive integer greater than 1, and L is configurable.

As one embodiment, the L vectors depend on only the first CSI of the first CSI and the second CSI.

As one embodiment, the L vectors depend on only the second CSI of the first CSI and the second CSI.

As one embodiment, the L vectors represent L beams respectively.

As one embodiment, a number of dimensions of any two vectors of the L vectors is equal to a number of ports of one RS resource in the first RS resource set.

As one embodiment, the L vectors comprise K vector groups, each vector group of the K vector groups is composed of part of vectors of the L vectors, and K is a positive integer greater than 1 and not greater than a number of RS resources comprised in the first RS resource set.

As one embodiment, a number of vectors comprised in each vector group of the K vector groups is configurable.

As one embodiment, the K vector groups are for K RS resources respectively, and each RS resource in the K RS resources is one RS resource in the first RS resource set.

As one embodiment, the first CSI indicates the L vectors.

As one embodiment, the second CSI indicates the L vectors.

As one embodiment, V vector groups depend on at least one of the first CSI or the second CSI, and each vector group of the V vector groups comprises a plurality of vectors; and the number of vectors comprised in each vector group of the V vector groups is configurable.

As one embodiment, the number of vectors comprised in each vector group of the V vector groups depends on W.

As one embodiment, the V vector groups are for V layers respectively.

As one embodiment, the V vector groups comprise frequency domain basis vectors for V layers respectively.

As one embodiment, each vector group of the V vector groups comprises K vector subgroups, each vector subgroup of the K vector subgroups is composed of part of vectors in the vector group to which the vectors belong, and K is a positive integer greater than 1 and not greater than the number of RS resources comprised in the first RS resource set.

As one embodiment, the number of vectors comprised in any vector subgroup in any vector group of the V vector groups is configurable.

As one embodiment, the number of vectors comprised in any vector subgroup in any vector group of the V vector groups depends on W.

As one embodiment, a first vector group set depends on at least one of the first CSI or the second CSI, a number of vector groups in the first vector group set is equal to V, the number of vectors comprised in each vector group in the first vector group set is equal to Q, Q is configurable, and Q is a positive integer.

As one embodiment, any vector in the first vector group set represents one Doppler shift.

As one embodiment, V vector groups in the first vector group set are for V layers respectively.

As one embodiment, V coefficient sets depend on at least one of the first CSI or the second CSI, and each coefficient in the V coefficient sets is one complex number.

As one embodiment, the V coefficient sets comprise at least one coefficient of 0 and at least one non-zero coefficient.

As one embodiment, any coefficient in the V coefficient sets is one non-zero complex number.

As one embodiment, the V coefficient sets correspond to V layers respectively.

As one embodiment, the V coefficient sets comprise merged coefficients corresponding to V layers respectively.

As one embodiment, the first CSI and the second CSI are used for determining the L vectors and the V coefficient sets.

As one embodiment, the first CSI and the second CSI are used for determining the L vectors, the V vector groups and the V coefficient sets.

As one embodiment, the first CSI and the second CSI are used for determining the L vectors, the first vector group set and the V coefficient sets.

As one embodiment, the at least one matrix depends on the L vectors and the V coefficient sets.

As one embodiment, the at least one matrix depends on the L vectors, the V vector groups and the V coefficient sets.

As one embodiment, the at least one matrix depends on the L vectors, the V vector groups, the first vector group set and the V coefficient sets.

As one embodiment, the at least one matrix is obtained by performing mathematical operations on the L vectors and the V coefficient sets.

As one embodiment, the at least one matrix is obtained by performing mathematical operations on the L vectors, the V vector groups and the V coefficient sets.

As one embodiment, the at least one matrix is obtained by performing mathematical operations on the L vectors, the V vector groups, the first vector group set and the V coefficient sets.

As one embodiment, the mathematical operations comprise linear operations.

As one embodiment, the mathematical operations comprise nonlinear operations.

As one embodiment, the mathematical operations comprise weighting and merging.

As one embodiment, the merging comprises linear merging.

As one embodiment, the merging comprises nonlinear merging.

As one embodiment, the mathematical operations comprise matrix operations.

As one embodiment, the matrix operations comprise matrix multiplication and/or matrix addition.

As one embodiment, the matrix operations comprise cascading.

As one embodiment, the matrix operations comprise dot product.

As one embodiment, the matrix operations comprise array multiplication, i.e., multiplying elements located at the same position in two matrices of the same dimension.

As one embodiment, the matrix operations comprise transposition and conjugation.

As one embodiment, the matrix operations comprise Kronecker product.

As one embodiment, the matrix operations comprise projection.

**Embodiment 2**

Embodiment 2 illustrates a schematic diagram of a network architecture according to one embodiment of the present application, as shown in FIG. 2.

FIG. 2 illustrates a network architecture 200 of Long-Term Evolution (LTE), Long-Term Evolution Advanced (LTE-A) and future 5G systems. The network architecture 200 of the LTE, LTE-A and future 5G systems is referred to as an Evolved Packet System (EPS) 200. The 5G NR or LTE network architecture 200 may be referred to as a 5G System (5GS)/Evolved Packet System (EPS) 200 or some other suitable terminologies. The 5GS/EPS 200 may comprise one or more pieces of User Equipment (UE) 201, one piece of UE241 performing sidelink communication with the UE201, a Next Generation-Radio Access Network (NG-RAN) 202, a 5G Core-Network (5GC)/Evolved Packet Core (EPC) 210, a Home Subscriber Server (HSS)/Unified Data Management (UDM) 220, and an Internet service 230. The 5GS/EPS200 may be interconnected with other access networks, but these entities/interfaces are not shown for simplicity. As shown in FIG. 2, the 5GS/EPS200 provides a packet switching service, but those skilled in the art will readily appreciate that various concepts presented throughout the present application may be extended to networks providing a circuit switching service. The NG-RAN202 comprises a New Radio (NR) Node B (gNB) 203 and other gNBs 204. The gNB203 provides user and control plane protocol termination towards the UE201. The gNB203 may be connected to other gNBs 204 via an Xn interface (e.g., backhaul). The gNB203 may also be referred to as a base station, a base transceiver station, a radio base station, a radio transceiving device, a transceiving device function, a Basic Service Set (BSS), an Extended Service Set (ESS), a Transmitter Receiver Point (TRP), or some other suitable terminologies. The gNB203 provides an access point to the 5GC/EPC210 for the UE201. Examples of the UE201 comprise a cellular phone, a smart phone, a Session Initiation Protocol (SIP) phone, a laptop computer, a Personal Digital Assistant (PDA), a satellite radio, a global positioning system, a multimedia apparatus, a video apparatus, a digital audio player (e.g., an MP3 player), a camera, a game console, a drone, an aircraft, a narrowband physical network device, a machine type communication device, a land vehicle, an automobile, a wearable device, or any other similarly functional apparatus. Those skilled in the art may also refer to the UE201 as a mobile station, a subscriber station, a mobile unit, a subscriber unit, a wireless unit, a remote unit, a mobile apparatus, a wireless apparatus, a wireless communication apparatus, a remote apparatus, a mobile subscriber station, an access terminal, a mobile terminal, a wireless terminal, a remote terminal, a handset, a user agent, a mobile client, a client, or some other suitable terminologies. The gNB203 is connected to the 5GC/EPC210 through an S1/NG interface. The 5GC/EPC210 comprises a mobility management entity (MME)/Authentication Management Field (AMF)/Session Management Function (SMF) 211, other MME/AMF/SMF214, a Service Gateway (S-GW)/User Plane Function (UPF) 212, and a Packet Data Network Gateway (P-GW)/UPF213. The MME/AMF/SMF211 is a control node that processes signaling between the UE201 and the 5GC/EPC210. Generally, the MME/AMF/SMF211 provides bearers and connection management. All user Internet Protocol (IP) packets are transmitted through the S-GW/UPF212, and the S-GW/UPF212 itself is connected to the P-GW/UPF213. The P-GW provides UE IP address allocation and other functions. The P-GW/UPF213 is connected to the Internet service 230. The Internet service 230 comprises operator-corresponding Internet protocol services, which may specifically comprise the Internet, an Intranet, an IP Multimedia Subsystem (IMS) and packet switching streaming services.

As one embodiment, the UE201 corresponds to a first node in the present application.

As one embodiment, the gNB203 corresponds to a second node in the present application.

As one embodiment, a wireless link between the UE201 and the gNB203 comprises a cellular network link.

As one embodiment, a sender of an RS in the first RS resource set comprises the gNB203.

As one embodiment, a recipient of an RS in the first RS resource set comprises the UE201.

As one embodiment, a sender of first CSI and second CSI comprises the UE201.

As one embodiment, a recipient of the first CSI and the second CSI comprises the gNB203.

As one embodiment, the UE201 supports generating and reporting CSI using a Type II codebook of 3GPP.

As one embodiment, the gNB203 supports recovery of CSI based on the Type II codebook of 3GPP.

As one embodiment, the UE201 supports using AI/ or ML to generate CSI reports.

As one embodiment, the UE201 supports using training data to generate a trained model or using the trained data to generate some parameters in the trained model.

As one embodiment, the UE201 supports using training data to generate a trained model and using the model to generate CSI.

As one embodiment, the gNB203 supports recovering AI- or deep learning-based CSI.

## Embodiment 3

Embodiment 3 illustrates a schematic diagram of an embodiment of a wireless protocol architecture for a user plane and a control plane according to one embodiment of the present application, as shown in FIG. 3.

Embodiment 3 shows a schematic diagram of one embodiment of the wireless protocol architecture for the user plane and the control plane according to the present application, as shown in FIG. 3. FIG. 3 is a schematic diagram illustrating an embodiment of a radio protocol architecture for a user plane 350 and a control plane 300. FIG. 3 presents the radio protocol architecture for the control plane 300 used between a first communication node device (UE, a gNB, or an RSU in V2X) and a second communication node device (a gNB, UE, or an RSU in V2X), or between two pieces of UE using three layers: a layer 1, a layer 2 and a layer 3. The Layer 1 (L1 layer) is a lowest layer and implements various Physical Layer (PHY) signal processing functions. The L1 layer will be referred to as a PHY301 herein. A layer 2 (L2 layer) 305 is above the PHY301, and is responsible for a link between the first communication node device and the second communication node device, or between two pieces of UE. The L2 layer 305 comprises a Medium Access Control (MAC) sublayer 302, a Radio Link Control (RLC) sublayer 303, and a Packet Data Convergence Protocol (PDCP) sublayer 304, and these sublayers are terminated at the second communication node device. The PDCP sublayer 304 provides multiplexing between different radio bearers and logical channels. The PDCP sublayer 304 also provides security by encrypting data packets and provides handover mobile support for the first communication node device between the second communication node devices. The RLC sublayer 303 provides segmentation and reassembly of upper layer data packets, retransmission of lost data packets, and reordering of data packets to compensate for unordered reception caused by an HARQ. The MAC sublayer 302 provides multiplexing between logical and transmission channels. The MAC sublayer 302 is also responsible for allocating various radio resources (e.g., resource blocks) in one cell between the first communication node devices. The MAC sublayer 302 is also responsible for HARQ operations. A Radio Resource Control (RRC) sublayer 306 in the layer 3 (L3 layer) in the control plane 300 is responsible for obtaining radio resources (i.e., radio bearers) and configuring a lower layer using RRC signaling between the second communication node device and the first communication node device. The radio protocol architecture for the user plane 350 comprises the layer 1 (L1 layer) and the layer 2 (L2 layer). The radio protocol architecture for the first communication node device and the second communication node device in the user plane 350 is substantially the same for a physical layer 351, a PDCP sublayer 354 in an L2 layer 355, an RLC sublayer 353 in the L2 layer 355, and a MAC sublayer 352 in the L2 layer 355 as for the corresponding layers and sublayers in the control plane 300, but the PDCP sublayer 354 also provides header compression for upper layer data packets to reduce the radio transmission overhead. The L2 layer 355 in the user plane 350 also comprises a Service Data Adaptation Protocol (SDAP) sublayer 356, and the SDAP sublayer 356 is responsible for mapping between a QoS stream and a Data Radio Bearer (DRB) to support the diversity of services. Although not shown in the figure, the first communication node device may have several upper layer parts above the L2 layer 355, comprising a network layer (e.g., an IP layer) terminating at a P-GW on a network side and an application layer terminating at another end (e.g., remote UE, and a server) of connection.

As one embodiment, the wireless protocol architecture in FIG. 3 is applicable to a first node in the present application.

As one embodiment, the wireless protocol architecture in FIG. 3 is applicable to a second node in the present application.

As one embodiment, an RS in a first RS resource set is generated at the PHY301 or a PHY351.

As one embodiment, first CSI is generated at the PHY301 or the PHY351.

As one embodiment, second CSI is generated at the PHY301 or the PHY351.

As one embodiment, a higher layer in the present application refers to a layer above a physical layer.

**Embodiment 4**

Embodiment 4 illustrates a schematic diagram of a first communication device and a second communication device according to one embodiment of the present application, as shown in FIG. 4. FIG. 4 is a block diagram of a first communication device 410 and a second communication device 450 communicating with each other in an access network.

The first communication device 410 comprises a controller/processor 475, a memory 476, a receiving processor 470, a transmitting processor 416, a multi-antenna receiving processor 472, a multi-antenna transmitting processor 471, a transmitting device/receiving device 418, and an antenna 420.

The second communication device 450 comprises a controller/processor 459, a memory 460, a data source 467, a transmitting processor 468, a receiving processor 456, a multi-antenna transmitting processor 457, a multi-antenna receiving processor 458, a transmitting device/receiving device 454, and an antenna 452.

In transmission from the first communication device 410 to the second communication device 450, at the first communication device 410, upper layer data packets from a core network are provided to the controller/processor 475. The controller/processor 475 implements functionality of an L2 layer. In a DL, the controller/processor 475 provides header compression, encryption, packet segmentation and reordering, multiplexing between logical and transmission channels, and radio resource allocation to the second communication device 450 on the basis of various priority metrics. The controller/processor 475 is also responsible for HARQ operation, retransmission of lost packets, and signaling to the second communication device 450. The transmitting processor 416 and the multi-antenna transmitting processor 471 implement various signal processing functions for an L1 layer (i.e., a physical layer). The transmitting processor 416 implements coding and interleaving to facilitate Forward Error Correction (FEC) at the second communication device 450, and constellation mapping on the basis of various modulation schemes (e.g., Binary Phase Shift Keying (BPSK), quadrature phase shift keying (QPSK), M-Phase Shift Keying (M-PSK), and M-Quadrature Amplitude Modulation (M-QAM)). The multi-antenna transmitting processor 471 performs digital spatial precoding, comprising codebook-based precoding, non-codebook-based precoding, and beamforming processing, on coded and modulated symbols, to generate one or more spatial streams. The transmitting processor 416 then maps each spatial stream to a sub-carrier, multiplexes the modulated signals with a reference signal (e.g., pilot frequency) in a time domain and/or frequency domain, and then uses an Inverse Fast Fourier Transform (IFFT) to generate a physical channel carrying a time domain multi-carrier symbol stream. Then, the multi-antenna transmitting processor 471 performs sending analog precoding/beamforming operation on the time domain multi-carrier symbol stream. Each transmitting device 418 converts a baseband multi-carrier symbol stream provided by the multi-antenna transmitting processor 471 into a radio frequency stream, and then provides the radio frequency stream to the different antennas 420.

In transmission from the first communication device 410 to the second communication device 450, at the second communication device 450, each receiving device 454 receives a signal through a corresponding antenna 452 thereof. Each receiving device 454 recovers information modulated onto a radio frequency carrier and converts the radio frequency stream into a baseband multi-carrier symbol stream to provide the baseband multi-carrier symbol stream to the receiving processor 456. The receiving processor 456 and the multi-antenna receiving processor 458 implement various signal processing functions of the L1 layer. The multi-antenna receiving processor 458 performs receiving analog precoding/beamforming operation on the baseband multi-carrier symbol stream from the receiving device 454. The receiving processor 456 uses a Fast Fourier Transform (FFT) to convert the baseband multi-carrier symbol stream after the receiving the analog precoding/beamforming operation from the time domain to the frequency domain. In the frequency domain, the physical layer data signal and the reference signal are demultiplexed by the receiving processor 456, wherein the reference signal will be used for channel estimation, and the data signal is used for recovering any parallel stream with the second communication device 450 as a destination after multi-antenna detection in the multi-antenna receiving processor 458. Symbols on each parallel stream are demodulated and recovered in the receiving processor 456, and soft decisions are generated. Then, the receiving processor 456 decodes and deinterleaves the soft decisions to recover upper layer data and control signals transmitted by the first communication device 410 on the physical channel. Then, the upper layer data and the control signals are provided to the controller/processor 459. The controller/processor 459 implements the functions of the L2 layer. The controller/processor 459 may be associated with the memory 460 that stores program codes and data. The memory 460 may be referred to as a computer-readable medium. In the DL, the controller/processor 459 provides multiplexing between transmission and logical channels, packet reassembly, decryption, header decompression, and control signal processing to recover the upper layer data packets from the core network. Then, the upper layer data packets are provided to all protocol layers above the L2 layer. Various control signals may also be provided to an L3 for L3 processing. The controller/processor 459 is also responsible for error detection using an Acknowledgment (ACK) and/or Negative Acknowledgment (NACK) protocol to support the HARQ operation.

In transmission from the second communication device 450 to the first communication device 410, at the second communication device 450, the data source 467 is used for providing the upper layer data packets to the controller/processor 459. The data source 467 represents all protocol layers above the L2 layer. Similar to the transmission function at the first communication device 410 described in the DL, the controller/processor 459 implements header compression, encryption, packet segmentation and reordering, and multiplexing between logical and transmission channels on the basis of radio resource allocation of the first communication device 410, and implements L2 layer functions for the user plane and the control plane. The controller/processor 459 is also responsible for HARQ operation, retransmission of lost packets, and signaling to the first communication device 410. The transmitting processor 468 executes modulation mapping and channel coding processing; the multi-antenna transmitting processor 457 performs digital multi-antenna spatial precoding, comprising codebook-based precoding, non-codebook-based precoding, and beamforming processing; and then, the transmitting processor 468 modulates the generated spatial streams into multi-carrier/single-carrier symbol streams, which are provided to the different antenna 452 via the transmitting device 454 after analog precoding/beamforming operation in the multi-antenna transmitting processor 457. Each transmitting device 454 first converts the baseband symbol stream provided by the multi-antenna transmitting processor 457 into a radio frequency symbol stream, and then provides the radio frequency symbol stream to the antenna 452.

In the transmission from the second communication device 450 to the first communication device 410, the functions at the first communication device 410 are similar to the receiving functions at the second communication device 450 described in the transmission from the first communication device 410 to the second communication device 450. Each receiving device 418 receives a radio frequency signal through the corresponding antenna 420, converts the received radio frequency signal into a baseband signal, and provides the baseband signal to the multi-antenna receiving processor 472 and the receiving processor 470. The receiving processor 470 and the multi-antenna receiving processor 472 jointly implement the functions of the L1 layer. The controller/processor 475 implements the functions of the L2 layer. The controller/processor 475 may be associated with the memory 476 that stores program codes and data. The memory 476 may be referred to as a computer-readable medium. The controller/processor 475 provides multiplexing between transmission and logical channels, packet reassembly, decryption, header decompression, and control signal processing to recover upper layer data packets from the second communication device 450. The upper layer data packets from the controller/processor 475 may be provided to the core network. The controller/processor 475 is also responsible for error detection using an ACK and/or NACK protocol to support the HARQ operation.

As one embodiment, the second communication device 450 comprises: at least one processor and at least one memory, wherein the at least one memory comprises computer program codes; and the at least one memory and the computer program codes are configured to be used together with the at least one processor. The second communication device 450 apparatus at least receives an RS in a first RS resource set; and sends first CSI and second CSI. At least one matrix depends on the first CSI and the second CSI, and the at least one matrix is used for precoding; and the first CSI and the second CSI both depend on channel measurements obtained on the basis of the first RS resource set, the first CSI is based on a codebook, and the second CSI conforms to at least one of the following:

channel parameters recovered by a target receiver of the second CSI on the basis of the second CSI are unknown to a first node;

a generator used for generating the second CSI is obtained on the basis of training; and

the second CSI does not belong to CSI defined by 3GPP R17 or CSI defined by a previous release of 3GPP R17.

As one embodiment, the second communication device 450 comprises: a memory for storing a computer-readable instruction program, wherein the computer-readable instruction program generates actions when executed by at least one processor, and the actions comprise: receiving the RS in the first RS resource set; and sending the first CSI and the second CSI.

As one embodiment, the first communication device 410 comprises: at least one processor and at least one memory; the at least one memory comprising a computer program code, wherein the at least one memory and the computer program codes are configured to be used together with the at least one processor. The first communication device 410 apparatus at least sends the RS in the first RS resource set; and receives the first CSI and the second CSI. At least one matrix depends on the first CSI and the second CSI, and the at least one matrix is used for precoding; and the first CSI and the second CSI both depend on channel measurements obtained on the basis of the first RS resource set, the first CSI is based on a codebook, and the second CSI conforms to at least one of the following:

channel parameters recovered by a second node on the basis of the second CSI are unknown to a sender of the second CSI;

the generator used for generating the second CSI is obtained on the basis of training; and

the second CSI does not belong to CSI defined by 3GPP R17 or CSI defined by a previous release of 3GPP R17.

As one embodiment, the first communication device 410 comprises: a memory for storing a computer-readable instruction program, wherein the computer-readable instruction program generates actions when executed by at least one processor, and the actions comprise: sending the RS in the first RS resource set; and receiving the first CSI and the second CSI.

As one embodiment, the first node in the present application comprises the second communication device 450.

As one embodiment, the second node in the present application comprises the first communication device 410.

As one embodiment, at least one of {the antenna 452, the receiving device 454, the receiving processor 456, the multi-antenna receiving processor 458, the controller/processor 459, the memory 460, and the data source 467} is used for receiving the RS in the first RS resource set; and at least one of {the antenna 420, the transmitting device 418, the transmitting processor 416, the multi-antenna transmitting processor 471, the controller/processor 475, and the memory 476} is used for sending the RS in the first RS resource set.

As one embodiment, at least one of {the antenna 420, the receiving device 418, the receiving processor 470, the multi-antenna receiving processor 472, the controller/processor 475, and the memory 476} is used for receiving the first CSI and the second CSI; and at least one of {the antenna 452, the transmitting device 454, the transmitting processor 468, the multi-antenna transmitting processor 457, the controller/processor 459, the memory 460, and the data source 467} is used for sending the first CSI and the second CSI.

As one embodiment, at least one of {the antenna 452, the receiving device 454, the receiving processor 456, the multi-antenna receiving processor 458, the controller/processor 459, the memory 460, and the data source 467} is used for receiving first signaling; and at least one of {the antenna 420, the transmitting device 418, the transmitting processor 416, the multi-antenna transmitting processor 471, the controller/processor 475, and the memory 476} is used for sending the first signaling.

## Embodiment 5

Embodiment 5 illustrates a flow chart of transmission according to one embodiment of the present application, as shown in FIG. 5. In FIG. 5, a second node U1 and a first node U2 are communication nodes for transmission by an air interface. In FIG. 5, steps in block F51 are optional.

For the second node U1, first signaling is sent in step S5101; an RS is sent in a first RS resource set in step S511; and first CSI and second CSI are received in step S512.

For the first node U2, the first signaling is received in step S5201; an RS is received in the first RS resource set in step S521; and the first CSI and the second CSI are sent in step S521.

In Embodiment 5, at least one matrix depends on the first CSI and the second CSI, and the at least one matrix is used for precoding; and the first CSI and the second CSI both depend on channel measurements obtained on the basis of the first RS resource set, the first CSI is based on a codebook, and the second CSI conforms to at least one of the following:

channel parameters recovered by the second node U1 on the basis of the second CSI are unknown to the first node U2;

a generator used for generating the second CSI is obtained on the basis of training; and

the second CSI does not belong to CSI defined by 3GPP R17 or CSI defined by a previous release of 3GPP R17.

As one embodiment, the first node U2 is a first node in the present application.

As one embodiment, the second node U1 is a second node in the present application.

As one embodiment, an air interface between the second node U1 and the first node U2 comprises a wireless interface between a base station device and user equipment.

As one embodiment, the air interface between the second node U1 and the first node U2 comprises a wireless interface between a relay node device and user equipment.

As one embodiment, the air interface between the second node U1 and the first node U2 comprises a wireless interface between user equipment and user equipment.

As one embodiment, the second node U1 is a serving cell maintaining base station of the first node U2.

As one embodiment, the first CSI and the second CSI are both transmitted on a Physical Uplink Shared Channel (PUSCH).

As one embodiment, the first CSI and the second CSI are both transmitted on a Physical Uplink Control Channel (PUCCH).

As one embodiment, the first CSI is transmitted on a PUCCH, and the second CSI is transmitted on a PUSCH.

As one embodiment, the first CSI is transmitted on a PUSCH, and the second CSI is transmitted on a PUCCH.

As one embodiment, the first CSI and the second CSI are transmitted on the same physical channel.

As one sub-embodiment of the above embodiment, the same physical channel is a PUSCH.

As one sub-embodiment of the above embodiment, the same physical channel is a PUCCH.

As one embodiment, the first CSI and the second CSI are transmitted on two different physical channels.

As one sub-embodiment of the above embodiment, the two different physical channels are two PUSCHs.

As one sub-embodiment of the above embodiment, the two different physical channels are two PUCCHs.

As one sub-embodiment of the above embodiment, the two different physical channels are one PUSCH and one PUCCH.

As one sub-embodiment of the above embodiment, the sending of the first CSI is earlier than the sending of the second CSI.

As one embodiment, the first CSI is based on a Type II codebook.

As one embodiment, L vectors depend on the first CSI, V coefficient sets depend on the second CSI, and the at least one matrix depends on the L vectors and the V coefficient sets; and L is a positive integer greater than 1, L is configurable, and V is a positive integer.

As one embodiment, V vector groups depend on at least one of the first CSI and the second CSI, and V is a positive integer; each vector group of the V vector groups comprises a plurality of vectors, and a number of vectors comprised in each vector group of the V vector groups is configurable; and the at least one matrix depends on the V vector groups.

As one embodiment, a first vector group set depends on at least one of the first CSI and the second CSI, a number of vector groups in the first vector group set is equal to V, and V is a positive integer; the number of vectors comprised in each vector group in the first vector group set is equal to Q, Q is configurable and Q is a positive integer; and the at least one matrix depends on the first vector group set.

As one embodiment, the second CSI depends on a first encoder, and the first encoder is obtained on the basis of training.

As one embodiment, steps in block F51 in FIG. 5 exist; and the first signaling triggers a single CSI report of a first report configuration, wherein the first CSI and the second CSI both depend on the first report configuration.

As one embodiment, the first signaling is transmitted on a PDCCH.

Generally, how to perform channel measurements and how to calculate CSI is determined by an equipment manufacturer, and some non-limiting implementations are described below:

As one embodiment, the first node obtains channel information by measuring an RS transmitted in the first RS resource set, and the channel information includes, but is not limited to, one or more of a channel matrix $\{H_w, w = 1, ..., W\}$, correlation, received power, Reference Signal Received Power (RSRP), or a phase, where $W$ is a number of subbands, the dimension of $H_w$ is $R \times T$, and $T$ and $R$ are a number of transmitting antenna ports and a number of receiving antennas, respectively.

As one embodiment, the first node obtains the first CSI and the second CSI by operating the channel information, and the operation includes, but is not limited to, one or more of mathematical operations, matrix operations, matrix decomposition, averaging, filtering, quantization, interpolation, table lookup, or artificial intelligence/machine learning-based methods. Interference information and/or noise information may also be used in the processing, and the interference information and/or noise information is obtained by performing interference measurements in NZP CSI-RS resources or CSI-IM resources; the interference information includes, but is not limited to, one or more of the received power, the RSRP, or the correlation; and how to perform interference measurements is also determined by the equipment manufacturer.

As one embodiment, under a condition that for a channel matrix $\{H_w\}$, the first node uses a precoding matrix $\{V_w, w = 1, ..., W\}$, the first node obtains a precoded equivalent channel $\{P_w = H_w \cdot V_w, w = 1, ..., W\}$, wherein the dimension of $V_w$ is $T \times V$, and $V$ is a rank or a number of layers; the precoding matrix {$V_w$} is determined by, for example, but not limited to, matrix operations, matrix decomposition, table lookup, quantization, averaging, filtering or interpolation, etc.; and by, for example, but not limited to, Signal-to-Noise and Interference Ratio (SINR), Exponential Effective SINR Mapping (EESM), or Received Block Mean Mutual Information Ratio (RBIR) guideline, and by combining Interference signals and noise information, the equivalent channel capacity of $P_w$, w = 1, ..., W is calculated, and then a CQI is determined through equivalent channel capacity by table lookup or the like. In general, the direct mapping of a CQI value depends on the performance of a receiver, or hardware-related factors such as modulation modes; and the precoding matrix {$V_w$} is reported in a codebook-based manner and/or an artificial intelligence/machine learning-based manner.

As one embodiment, the precoding matrix {$V_w$} is reported through the first CSI and the second CSI.

### Embodiment 6

Embodiment 6 illustrates a schematic diagram of first CSI based on a Type II codebook according to one embodiment of the present application, as shown in FIG. 6.

As one embodiment, the first CSI comprises a Type II codebook-based PMI.

As one embodiment, the first CSI comprises all or part of information of the Type II codebook-based PMI.

As one embodiment, the first CSI comprises part of the information of the Type II codebook-based PMI.

As one embodiment, the first CSI comprises part of the Type II codebook-based PMI.

As one embodiment, the Type II codebook is used for generating the first CSI.

As one embodiment, the Type II codebook is used for generating a PMI in the first CSI.

As one embodiment, the first CSI being based on the Type II codebook refers to: the first CSI is the Type II codebook-based PMI.

As one embodiment, the first CSI being based on the Type II codebook refers to: the first CSI comprises all or part of information of the Type II codebook-based PMI.

As one embodiment, the first CSI being based on the Type II codebook refers to: the first CSI comprises part of the information of the Type II codebook-based PMI.

As one embodiment, the first CSI being based on the Type II codebook refers to: the PMI in the first CSI is generated on the basis of the Type II codebook.

As one embodiment, the first CSI comprises only the Type II codebook-based PMI.

As one embodiment, the first CSI comprises only part of the information of the Type II codebook-based PMI.

As one embodiment, the first CSI comprises all or part of the information of the Type II codebook-based PMI, and also comprises one or more of a CQI, a CRI, an LI or an RI.

As one embodiment, the first CSI comprises a Type II codebook-based $i_{1,1}$ and/or $i_{1,2}$.

As one embodiment, the first CSI comprises all or part of the information in the Type II codebook-based $i_{1,1}$ and/or $i_{1,2}$,

As one embodiment, the first CSI comprises a Type II codebook-based $i_{1,5}$ and/or {$i_{1,6,l}$, $l$ = 1, ... V}, and V is a number of layers.

As one embodiment, the first CSI comprises all or part of the information in the Type II codebook-based $i_{1,5}$ and/or {$i_{1,6,l}$, $l$ = 1, ... V}, and V is a number of layers.

As one embodiment, the first CSI comprises all or part of information in one or more of {$i_{1,3,l}$, $l$ = 1, ... V}, {$i_{1,4,l}$, $l$ = 1, ... V, {$i_{1,7,l}$, $l$ = 1, ... V}, {$i_{1,8,l}$, $l$ = 1, ... V}, {$i_{2,1,l}$, $l$ = 1, ... V}, {$i_{2,2,l}$, $l$ = 1, ... V}, {$i_{2,3,l}$, $l$ = 1, ... V}, {$i_{2,4,l}$, $l$ = 1, ... V} or {$i_{2,5,l}$, $l$ = 1, ... V} on the basis of the Type II codebook; and V is a number of layers.

As one embodiment, the Type II codebook comprises Type II codebooks from 3GPP NR Release (R) 17 and releases prior to R17.

As one embodiment, the Type II codebook comprises the Type II codebook of 3GPP NR R15.

As one embodiment, the Type II codebook comprises a Type II port selection codebook of 3GPP NR R15.

As one embodiment, the Type II codebook comprises an enhanced Type II codebook of 3GPP NR R16.

As one embodiment, the Type II codebook comprises an enhanced Type II port selection codebook of 3GPP NR R16.

As one embodiment, the Type II codebook comprises a further enhanced Type II port selection codebook of 3GPP NR R17.

As one embodiment, the Type II codebook comprises at least one of the Type II codebook of 3GPP NR R15, the Type II port selection codebook of 3GPP NR R15, the enhanced Type II codebook of 3GPP NR R16, the enhanced Type II port selection codebook of 3GPP NR R16, or the further enhanced Type II port selection codebook of 3GPP NR R17.

As one embodiment, recovered channel parameters comprise all or part of information in the Type II codebook-based $i_{1,1}$ and/or $i_{1,2}$.

As one embodiment, the recovered channel parameters comprise all or part of information in a Type II codebook-based {$i_{1,3,l}$} and/or {$i_{1,4,l}$}.

As one embodiment, the recovered channel parameters comprise all or part of information in a Type II codebook-based {$i_{2,1,l}$} and/or {$i_{2,2,l}$}.

As one embodiment, the recovered channel parameters comprise all or part of information in one or more of the Type II codebook-based $i_{1,5}$, {$i_{1,6,l}$}, {$i_{1,7,l}$} or {$i_{1,8,l}$}.

As one embodiment, the recovered channel parameters comprise all or part of information in one or more of a Type II codebook-based $\{i_{2,3,l}\}$, $\{i_{2,4,l}\}$ or $\{i_{2,5,l}\}$.

As one embodiment, definitions of $i_{1,1}$ and $i_{1,2}$ refer to 3GPP TS38.214.

As one embodiment, the specific definitions of the $i_{1,3,l}$, the $i_{1,4,l}$, the $i_{2,1,l}$ and the $i_{2,2,l}$ refer to 3GPP TS38.214.

As one embodiment, definitions of $i_{1,5}$, $i_{1,6,l}$, $i_{1,7,l}$, $i_{1,8,l}$, $i_{2,3,l}$, $i_{2,4,l}$ and $i_{2,5,l}$ refer to 3GPP TS38.214.

As one embodiment, the PMI comprised in the first CSI is generated in a manner defined by a Type II.

As one embodiment, the first CSI comprises part of the PMI generated in a manner defined by the Type II.

## Embodiment 7

Embodiment 7 illustrates a schematic diagram of at least one matrix, L vectors and coefficient sets according to one embodiment of the present application, as shown in FIG. 7. In Embodiment 7, the L vectors depend on first CSI, V coefficient sets depend on second CSI, and the at least one matrix depends on the L vectors and the V coefficient sets.

As one embodiment, V is a number of layers.

As one embodiment, L is configured by a higher layer parameter.

As one embodiment, the L vectors are mutually pairwise orthogonal.

As one embodiment, two vectors of the L vectors are not orthogonal.

As one embodiment, any vector of the L vectors is one column of a Discrete Fourier Transform (DFT) matrix.

As one embodiment, the dimensions of any two vectors of the L vectors are equal.

As one embodiment, a number of dimensions of any two vectors of the L vectors is equal to a number of ports of one RS resource in a first RS resource set.

As one embodiment, L is less than the number of ports of the RS resource in the first RS resource set.

As one embodiment, the L vectors are L spatial domain basis vectors.

As one embodiment, the L vectors correspond to L beams respectively.

As one embodiment, the L vectors comprise K vector groups, each vector group of the K vector groups is composed of part of vectors of the L vectors, and K is a positive integer greater than 1.

As one embodiment, K is not greater than a number of RS resources comprised in the first RS resource set.

As one embodiment, K is equal to the number of RS resources comprised in the first RS resource set.

As one embodiment, K is less than the number of RS resources comprised in the first RS resource set.

As one embodiment, a number of vectors comprised in each vector group of the K vector groups is configurable.

As one embodiment, the number of vectors comprised in each vector group of the K vector groups is configured by RRC signaling.

As one embodiment, the number of vectors comprised in each vector group of the K vector groups is configured separately.

As one embodiment, the number of vectors comprised in each vector group of the K vector groups is fixed.

As one embodiment, two vector groups of the K vector groups comprise unequal numbers of vectors.

As one embodiment, any two vector groups of the K vector groups comprise an equal number of vectors.

As one embodiment, the number of vectors comprised in each vector group of the K vector groups is less than the number of ports of one RS resource in the first RS resource set.

As one embodiment, L is equal to a sum of the number of vectors comprised in each vector group of the K vector groups.

As one embodiment, L is greater than a number of ports of any RS resource in the first RS resource set.

As one embodiment, for any vector group of the K vector groups, vectors in the vector group are pairwise orthogonal.

As one embodiment, K is equal to the number of RS resources comprised in the first RS resource set.

As one embodiment, K is less than the number of RS resources comprised in the first RS resource set.

As one embodiment, the K vector groups are for K RS resources respectively, and each RS resource in the K RS resources is one RS resource in the first RS resource set.

As one sub-embodiment of the above embodiment, K is less than the number of RS resources comprised in the first RS resource set, and a first node obtains channel measurements for calculating the second CSI on the basis of only the K RS resources in the first RS resource set.

As one sub-embodiment of the above embodiment, K is less than the number of RS resources comprised in the first RS resource set, and the first CSI indicates the K RS resources from the first RS resource set.

As one embodiment, the K vector groups comprise spatial domain basis vectors for the K RS resources respectively.

As one embodiment, vectors in the K vector groups correspond to beams for the K RS resources respectively.

As one embodiment, the first CSI indicates the L vectors.

As one embodiment, for any vector of the L vectors, the first CSI indicates the vector from one candidate vector set.

As one embodiment, the L vectors are indicated by $i_{1,1}$ and $i_{1,2}$,

As one embodiment, the L vectors are indicated by at least one of $i_{1,1}$ or $i_{1,2}$.

As one embodiment, each coefficient in the V coefficient sets is one complex number.

As one embodiment, the V coefficient sets are for V layers respectively.

As one embodiment, the V coefficient sets depending on the second CSI refers to: at least part of coefficients in the V coefficient sets depend on the second CSI.

As one embodiment, the V coefficient sets depending on the second CSI refers to: all coefficients in the V coefficient sets depend on the second CSI.

As one embodiment, the V coefficient sets depending on the second CSI refers to: the V coefficient sets depend on at least the second CSI of the first CSI and the second CSI.

As one embodiment, the V coefficient sets depend on only the first CSI of the first CSI and the second CSI.

As one embodiment, the V coefficient sets depend on only the second CSI of the first CSI and the second CSI.

As one embodiment, the V coefficient sets depend on the first CSI and the second CSI.

As one embodiment, the V coefficient sets comprise at least one coefficient of 0 and at least one non-zero coefficient.

As one embodiment, any coefficient in the V coefficient sets is one non-zero complex number.

As one embodiment, a number of coefficients comprised in each coefficient set of the V coefficient sets is equal to $2 \times L \times W$.

As one embodiment, the number of coefficients comprised in each coefficient set of the V coefficient sets is equal to $2 \times L \times M$.

As one embodiment, the number of coefficients comprised in each coefficient set of the V coefficient sets is equal to $2 \times L \times M \times K$.

As one embodiment, the number of coefficients comprised in each coefficient set of the V coefficient sets is equal to $2 \times L \times M \times Q$.

As one embodiment, benefits of the above method comprise: improving CSI accuracy.

As one embodiment, the number of coefficients comprised in each coefficient set of the V coefficient sets is less than $2 \times L \times W$.

As one embodiment, the number of coefficients comprised in each coefficient set of the V coefficient sets is less than $2 \times L \times M$.

As one embodiment, the number of coefficients comprised in each coefficient set of the V coefficient sets is less than $2 \times L \times M \times K$.

As one embodiment, the number of coefficients comprised in each coefficient set of the V coefficient sets is less than $2 \times L \times M \times Q$.

As one embodiment, the benefits of the above method comprise: reducing report overheads.

As one embodiment, the V coefficient sets comprise merged coefficients corresponding to V layers respectively.

As one embodiment, each coefficient in the V coefficient sets is one combined coefficient.

As one embodiment, each non-zero coefficient in the V coefficient sets is one combined coefficient.

As one embodiment, each coefficient in the V coefficient sets is a combined coefficient for one RS resource of the K RS resources.

As one embodiment, each non-zero coefficient in the V coefficient sets is a combined coefficient for one RS resource of the K RS resources.

As one embodiment, the combined coefficient refers to a spatial domain combined coefficient.

As one embodiment, the combined coefficient refers to a spatial-frequency domain combined coefficient.

As one embodiment, the combined coefficient refers to a spatial-frequency-Doppler domain combined coefficient.

As one embodiment, each coefficient in the V coefficient sets comprises one amplitude and one phase.

As one embodiment, each coefficient of at least part of coefficients in the V coefficient sets comprises one amplitude and one phase.

As one embodiment, an amplitude of each coefficient in the V coefficient sets is equal to a product of one wideband amplitude and one narrowband amplitude.

As one embodiment, the amplitude of each coefficient in at least part of coefficients in the V coefficient sets is equal to the product of one wideband amplitude and one narrowband amplitude.

As one embodiment, the first CSI indicates the V coefficient sets.

As one embodiment, the second CSI indicates the V coefficient sets.

As one embodiment, the first CSI and the second CSI jointly indicate the V coefficient sets.

As one embodiment, for at least part of coefficients in the V coefficient sets, an amplitude and a phase are indicated separately.

As one embodiment, for at least part of coefficients in the V coefficient sets, a wideband amplitude and a narrowband amplitude are indicated separately.

As one embodiment, for at least part of coefficients in the V coefficient sets, the first CSI indicates the amplitude of each coefficient of the at least part of coefficients, and the second CSI indicates the phase of each coefficient of the at least part of coefficients.

As one embodiment, for at least part of coefficients in the V coefficient sets, the first CSI indicates the wideband amplitude of each coefficient of the at least part of coefficients, and the second CSI indicates the narrowband amplitude of each coefficient of the at least part of coefficients.

As one sub-embodiment of the above embodiment, the second CSI also indicates the phase of each coefficient of the at least part of coefficients.

As one embodiment, for at least part of coefficients in the V coefficient sets, the first CSI indicates a position of each coefficient of the at least part of coefficients within one coefficient matrix.

As one embodiment, for at least part of coefficients in the V coefficient sets, the second CSI indicates the position of each coefficient of the at least part of coefficients within one coefficient matrix.

As one embodiment, the V coefficient sets are indicated by $\{i_{2,1,l}\}$ and $\{i_{2,2,l}\}$.

As one embodiment, the V coefficient sets are indicated by $\{i_{2,1,l}\}$, $\{i_{2,2,l}\}$, $\{i_{1,3,l}\}$ and $\{i_{1,4,l}\}$.

As one embodiment, the V coefficient sets are indicated by at least one of $\{i_{2,1,l}\}$, $\{i_{2,2,l}\}$, $\{i_{1,3,l}\}$ or $\{i_{1,4,l}\}$.

As one embodiment, the V coefficient sets are indicated by $\{i_{2,3,l}\}$, $\{i_{2,4,l}\}$ and $\{i_{2,5,l}\}$.

As one embodiment, the V coefficient sets are indicated by $\{i_{1,7,l}\}$, $\{i_{1,8,l}\}$, $\{i_{2,3,l}\}$, $\{i_{2,4,l}\}$ and $\{i_{2,5,l}\}$.

As one embodiment, the V coefficient sets are indicated by at least one of $\{i_{1,7,l}\}$, $\{i_{1,8,l}\}$, $\{i_{2,3,l}\}$, $\{i_{2,4,l}\}$ or $\{i_{2,5,l}\}$.

As one embodiment, the recovered channel parameters comprise the V coefficient sets.

As one embodiment, a target receiver of the second CSI recovers the V coefficient sets on the basis of the second CSI.

As one embodiment, the V coefficient sets recovered by the target receiver of the second CSI on the basis of the second CSI are unknown to the first node.

The benefits of the above method comprise: more accurate CSI reports and good forward compatibility.

As one embodiment, the recovered channel parameters comprise all or part of coefficients in the V coefficient sets.

As one embodiment, the recovered channel parameters comprise narrowband amplitudes and phases of all or part of coefficients in the V coefficient sets.

As one embodiment, the target receiver of the second CSI recovers the amplitudes of all or part of coefficients in the V coefficient sets on the basis of the first CSI, and recovers the phases of all or part of the coefficients in the V coefficient sets on the basis of the second CSI.

As one embodiment, the phase recovered by the target receiver of the second CSI on the basis of the second CSI is unknown to the first node.

As one embodiment, the target receiver of the second CSI recovers the wideband amplitudes of all or part of coefficients in the V coefficient sets on the basis of the first CSI, and recovers the narrowband amplitudes and phases of all or part of the coefficients in the V coefficient sets on the basis of the second CSI.

As one embodiment, the narrowband amplitudes and phases recovered by the target receiver of the second CSI on the basis of the second CSI are unknown to the first node.

The benefits of the above method comprise: better backward compatibility and reduction of implementation complexity.

As one embodiment, the V coefficient sets are calculated on the basis of the conditions of the L vectors.

As one embodiment, the first CSI carries an RI, and the V coefficient sets are calculated on the basis of the conditions of the RI carried by the first CSI and the L vectors.

As one embodiment, the first CSI carries an RI and a CRI, and the V coefficient sets are calculated on the basis of the conditions of the RI and the CRI carried by the first CSI and the L vectors.

As one embodiment, the L vectors and the V coefficient sets are used for determining the at least one matrix.

As one embodiment, the at least one matrix is obtained by performing mathematical operations on the L vectors and the V coefficient sets.

As one embodiment, the at least one matrix is obtained by weighting the L vectors using coefficients in the V coefficient sets, and then combining, concatenating or performing other matrix operations on the weighted vectors.

As one embodiment, any matrix of the at least one matrix is obtained by performing matrix operations on a first matrix and a first coefficient matrix; and the first matrix depends on the L vectors, and the first coefficient matrix depends on the V coefficient sets.

### Embodiment 8

Embodiment 8 illustrates a schematic diagram of at least one matrix and V vector groups according to one embodiment of the present application, as shown in FIG. 8. In Embodiment 8, the V vector groups depend on at least one of first CSI and second CSI, and the at least one matrix depends on the V vector groups.

As one embodiment, at least one of the first CSI or the second CSI indicates the V vector groups.

As one embodiment, at least one of the first CSI or the second CSI indicates each vector in the V vector groups.

As one embodiment, a number of vectors comprised in each vector group of the V vector groups depends on W.

As one embodiment, the number of vectors comprised in each vector group of the V vector groups is equal to M, and M is configurable.

As one embodiment, M is equal to N3 divided by R, multiplied by p, and then rounded up, and R and $p$ are configurable respectively.

As one embodiment, $p$ is a positive real number less than 1.

As one embodiment, $p$ is configured by a higher layer parameter 'paramCombination'.

As one embodiment, $p$ depends on a higher layer parameter 'paramCombination' and V.

As one embodiment, M is less than N3.

As one embodiment, for any vector group of the V vector groups, dimensions of any two vectors in the vector group are equal.

As one embodiment, for any vector group of the V vector groups, vectors in the vector group are mutually pairwise orthogonal.

As one embodiment, the dimensions of any two vectors in the V vector groups are equal.

As one embodiment, a dimension of any vector in the V vector groups is equal to N3.

As one embodiment, any vector in the V vector groups is one column of a Discrete Fourier Transform (DFT) matrix.

As one embodiment, any vector in the V vector groups corresponds to one delay or one delay path.

As one embodiment, the V vector groups are for V layers respectively.

As one embodiment, the V vector groups comprise frequency domain basis vectors for V layers respectively.

As one embodiment, the frequency domain refers to a delay domain.

As one embodiment, each vector group of the V vector groups comprises K vector subgroups, each vector subgroup of the K vector subgroups is composed of part of vectors of a vector group to which the vectors belong, and K is a positive integer greater than 1.

As one embodiment, benefits of the above method comprise: better support for CSI based on multiple TRPs and/or coherent joint transmission.

As one embodiment, the benefits of the above method comprises: improving the throughput, spectral efficiency and reliability of downlink transmission.

As one embodiment, for any vector group of the V vector groups, the number of vectors comprised in any two vector subgroups in the vector group is equal.

As one embodiment, the number of vectors comprised in any vector subgroup in the V vector groups depends on W.

As one embodiment, the number of vectors comprised in any vector subgroup in the V vector groups is equal to M, and M is configurable.

As one embodiment, for the K vector subgroups comprised in any vector group of the V vector groups, a reference vector subgroup is one vector subgroup of the K vector subgroups, and any vector subgroup of the K vector subgroups except for the reference vector subgroup depends on the reference vector subgroup and one phase offset.

As one embodiment, the benefits of the above method comprise: reducing overheads of CSI reports.

As one embodiment, any vector subgroup of the K vector subgroups except for the reference vector subgroup is equal to a product of the reference vector subgroup and one diagonal matrix, and the diagonal matrix depends on one phase offset.

As one sub-embodiment of the above embodiment, the diagonal matrix is equal to

$$diag\left(\left[1, e^{j\frac{2\pi}{N_3}\varphi}, \cdots, e^{j\frac{2\pi}{N_3}(N_3-1)\varphi}\right]\right), \text{ wherein } \varphi$$

is the one phase offset.

As one embodiment, the V vector groups depend on only the first CSI of the first CSI and the second CSI.

As one embodiment, the benefits of the above method comprise: better backward compatibility and simplified system design.

As one embodiment, the L vectors and the V vector groups depend on the first CSI, and the V coefficient sets depend on the second CSI.

As one embodiment, the first CSI indicates the V vector groups.

As one embodiment, the first CSI indicates each vector in the V vector groups.

As one embodiment, the first CSI indicates each vector in the V vector groups from a one candidate vector set.

As one embodiment, the first CSI indicates the reference vector subgroup in each vector group of the V vector groups.

As one embodiment, the first CSI indicates each vector in each reference vector subgroup from one candidate vector set.

As one embodiment, the first CSI indicates a phase offset of each vector subgroup in each vector group of the V vector groups except for the reference vector subgroup.

As one embodiment, the V vector groups are indicated by at least one of $i_{1,5}$ or $\{i_{1,6,l}\}$.

As one embodiment, the V vector groups depend on only the second CSI of the first CSI and the second CSI.

As one embodiment, the benefits of the above method comprise: better forward compatibility and more optimized report overheads.

As one embodiment, the recovered channel parameters comprise the V vector groups.

As one embodiment, the recovered channel parameters comprise each vector in the V vector groups.

As one embodiment, the recovered channel parameters comprise the reference vector subgroup in each vector group of the V vector groups.

As one embodiment, the recovered channel parameters comprise a phase offset of each vector subgroup in each vector group of the V vector groups except for the reference vector subgroup.

As one embodiment, a target receiver of the second CSI recovers the V vector groups on the basis of the second CSI.

As one embodiment, the V vector groups recovered by the target receiver of the second CSI on the basis of the second CSI are unknown to a first node.

As one embodiment, the target receiver of the second CSI recovers the reference vector subgroup in each vector group of the V vector groups and/or the phase offset of each vector subgroup in each vector group of the V vector groups except for the reference vector subgroup on the basis of the second CSI.

As one embodiment, the reference vector subset and/or the phase offset recovered by the target receiver of the second CSI on the basis of the second CSI are unknown to the first node.

As one embodiment, the V vector groups depend on the first CSI and the second CSI.

As one embodiment, the benefits of the above method comprise: more flexible design and suitability for different terminals.

As one embodiment, the first CSI indicates part of vectors in the V vector groups.

As one embodiment, the recovered channel parameters comprise part of vectors in the V vector groups.

As one embodiment, the first CSI indicates the reference vector subgroup in each vector group of the V vector groups, and the recovered channel information comprises each vector subgroup in each vector group of the V vector groups except for the reference vector subgroup.

As one embodiment, the recovered channel information comprises the reference vector subgroup in each vector group of the V vector groups, and the first CSI indicates the phase offset of each vector subgroup in each vector group of the V vector groups except for the reference vector subgroup.

As one embodiment, the first CSI indicates one subspace, and the recovered channel parameters comprise all or part of vectors in the V vector groups limited in the one subspace.

As one embodiment, the V coefficient sets are calculated on the basis of the conditions of the V vector groups.

As one embodiment, the V coefficient sets are calculated on the basis of the conditions of the L vectors and the V vector groups.

As one embodiment, the first CSI carries an RI, and the V coefficient sets are calculated on the basis of the RI carried by the first CSI, the L vectors and the V vector groups.

As one embodiment, the first CSI carries an RI and a CRI, and the V coefficient sets are calculated on the basis of the RI and the CRI carried by the first CSI, the L vectors and the V vector groups.

As one embodiment, the L vectors, the V vector groups and the V coefficient sets are used for determining the at least one matrix.

As one embodiment, the at least one matrix is obtained by performing mathematical operations on the L vectors, the V vector groups and the V coefficient sets.

As one embodiment, the at least one matrix is obtained by weighting the L vectors and the vectors in the V vector groups using coefficients from the V coefficient sets, and then combining, concatenating, or performing other matrix operations on the weighted vectors.

As one embodiment, the at least one matrix is obtained by weighting the L vectors using coefficients from the V coefficient sets and elements of vectors in the V vector groups, and then combining, concatenating, or performing other matrix operations on the weighted vectors.

As one sub-embodiment of the above embodiment, the weighting coefficients used for weighting are obtained by performing mathematical operations on the coefficients from the V coefficient sets and the elements of the vectors in the V vector groups.

As one embodiment, any matrix of the at least one matrix is obtained by performing matrix operations on a first matrix, a first coefficient matrix and a third matrix; and the first matrix depends on the L vectors, the first coefficient matrix depends on the V coefficient sets, and the third matrix depends on the V vector groups.

## Embodiment 9

Embodiment 9 illustrates a schematic diagram of at least one matrix and a first vector group set according to one embodiment of the present application, as shown in FIG. 9. In Embodiment 9, the first vector group set depends on at least one of first CSI and second CSI, a number of vector groups in the first vector group set is equal to V, a number of vectors comprised in each vector group in the first vector group set is equal to Q, and the at least one matrix depends on the first vector group set.

As one embodiment, Q is configured by a higher layer parameter.

As one embodiment, for any vector group in the first vector group set, dimensions of any two vectors in the vector group are equal.

As one embodiment, a dimension of any vector in the first vector group set are equal to N4, N4 is a positive integer greater than 1, and N4 is configurable.

As one embodiment, N4 is configured by a higher layer parameter.

As one embodiment, Q is less than N4.

As one embodiment, any vector in the first vector group set is one column of a DFT matrix.

As one embodiment, for any vector group in the first vector group set, vectors in the vector group are mutually pairwise orthogonal.

As one embodiment, any vector in the first vector group set corresponds to one Doppler shift.

As one embodiment, V vector groups in the first vector group set are for V layers respectively.

As one embodiment, the V vector groups in the first vector group set comprise Doppler domain basis vectors for V layers respectively.

As one embodiment, the Doppler domain refers to a time domain.

As one embodiment, the first vector group set depends on only the first CSI of the first CSI and the second CSI.

As one embodiment, benefits of the above method comprise: better backward compatibility and simplified system design.

As one embodiment, the first CSI indicates the first vector group set.

As one embodiment, the first CSI indicates each vector in the first vector group set.

As one embodiment, the first CSI indicates each vector in the first vector group set from one candidate vector set.

As one embodiment, the first vector group set depends on only the second CSI of the first CSI and the second CSI.

As one embodiment, the benefits of the above method comprise: better forward compatibility and more optimized report overheads.

As one embodiment, the recovered channel parameters comprise the first vector group set.

As one embodiment, the recovered channel parameters comprise each vector in the first vector group set.

As one embodiment, the first vector group set depends on the first CSI and the second CSI.

As one embodiment, the benefits of the above method comprise: more flexible design and suitability for different terminals.

As one embodiment, the first CSI indicates part of vectors in the first vector group set.

As one sub-embodiment of the above embodiment, the first CSI indicates each vector of the part of vectors from one candidate vector set.

As one embodiment, the recovered channel parameters comprise part of vectors in the first vector group set.

As one embodiment, the first CSI indicates one subspace, and the recovered channel parameters comprise all or part of vectors in the first vector group set limited in the one subspace.

As one embodiment, the L vectors and the V vector groups depend on the first CSI, and the first vector group set and the V coefficient sets depend on the second CSI.

As one embodiment, the L vectors and the V vector groups depend on the first CSI, the V coefficient sets depend on the second CSI, and the first vector group set depends on the first CSI and the second CSI.

As one embodiment, the V coefficient sets are calculated on the basis of the condition of the first vector group set.

As one embodiment, the V coefficient sets are calculated on the basis of the conditions of the L vectors, the V vector groups and the first vector group set.

As one embodiment, the first CSI carries an RI and/or a CRI, and the V coefficient sets are calculated on the basis of the conditions of the RI and/or CRI carried by the first CSI, the L vectors, the V vector groups and the first vector group set.

As one embodiment, the L vectors, the V vector groups, the first vector group set and the V coefficient sets are used for determining the at least one matrix.

As one embodiment, the at least one matrix is obtained by performing mathematical operations on the L vectors, the V vector groups, the first vector group set and the V coefficient sets.

As one embodiment, the at least one matrix is obtained by weighting the L vectors, the V vector groups, and vectors in the first vector group set using coefficients from the V coefficient sets, and then combining, concatenating, or performing other matrix operations on the weighted vectors.

As one embodiment, the at least one matrix is obtained by weighting the L vectors using the coefficients from the V coefficient sets, elements of the vectors in the V vector groups, and elements of the vectors in the first vector group set, and then combining, concatenating, or performing other matrix operations on the weighted vectors.

As one sub-embodiment of the above embodiment, the weighting coefficients used for weighting are obtained by performing mathematical operations on the coefficients from the V coefficient sets, the elements of the vectors in the V vector groups, and the elements of the vectors in the first vector group set.

As one embodiment, any matrix of the at least one matrix is obtained by performing matrix operations on a first matrix, a first coefficient matrix and a third matrix; and the first matrix depends on the L vectors, the first coefficient matrix depends on the V coefficient sets, and the third matrix depends on the V vector groups and the first vector group set.

## Embodiment 10

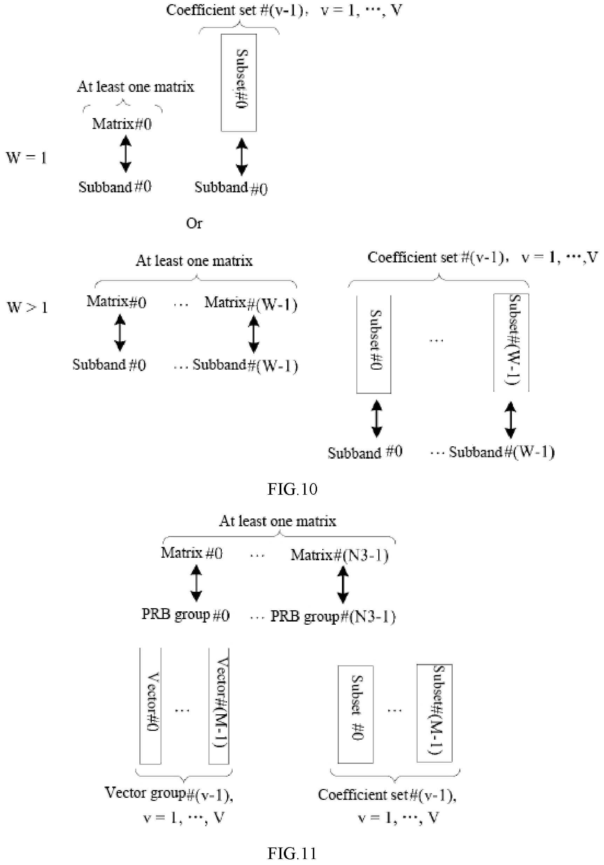

Embodiment 10 illustrates a schematic diagram of at least one matrix according to one embodiment of the present application, as shown in FIG. 10. In Embodiment 10, the at least one matrix comprises W matrices, and the W matrices are for the W subbands respectively; and each coefficient set of V coefficient sets comprises W subsets, and the W subsets are in one-to-one correspondence with the W subbands.

In FIG. 10, a coefficient set #(v-1) represents a coefficient set of the V coefficient sets that corresponds to an v-th layer, and v is any positive integer not greater than V; when W=1, the W matrices, the W subbands, and the W subsets are represented by matrix #0, subband #0, and subset #0, respectively; and when W>1, the W matrices are represented by matrix #0, ..., matrix #(W-1), the W subbands are represented by subband #0, ..., subband #(W-1), and the W subsets are represented by subset #0, ..., subset #(W-1).

As one embodiment, the W matrices are used for precoding of the W subbands respectively.

As one embodiment, the W matrices are precoding matrices of the W subbands respectively.

As one embodiment, a number of rows in each matrix of the W matrices is equal to a number of ports in an RS resource of the first RS resource set, and a number of columns is equal to V.

As one embodiment, V columns in each matrix of the W matrices are precoding vectors for V layers of one subband of the W subbands respectively.

As one embodiment, the W matrices depend on the L vectors and the V coefficient sets.

As one embodiment, a given matrix is any one of the W matrices, and the given matrix is for a given subband of the W subbands; the given matrix is obtained by weighting, combining, and concatenating the L vectors; and coefficients in a given coefficient group are used for weighting the L vectors, and the given coefficient group comprises a subset of each coefficient set of the V coefficient sets corresponding to the given subband.

As one embodiment, the given matrix is any one of the W matrices, and the given matrix is for a given subband of the W subbands; The given matrix comprises V columns, and a v-th column of the given matrix is equal to a product of a first matrix and a given coefficient vector, multiplied by one factor; the first matrix is equal to a Kronecker product of a second matrix and $\begin{bmatrix} 1 & 0 \\ 0 & 1 \end{bmatrix}$, the second matrix is composed of the L vectors as L columns, and non-zero elements in the given coefficient vector are composed of non-zero coefficients in a coefficient set corresponding to the v-th layer in the V coefficient sets and in a subset corresponding to the given subband; and v is any positive integer not greater than V.

As one embodiment, W is equal to 1.

As one embodiment, W is greater than 1.

## Embodiment 11

Embodiment 11 illustrates a schematic diagram of at least one matrix according to one embodiment of the present application, as shown in FIG. 11. In Embodiment 11, the at least one matrix comprises N3 matrices, and the N3 matrices are for N3 PRB groups respectively; a number of vectors comprised in each vector group of V vector groups is equal to M, each coefficient set of V coefficient sets comprises M subsets, and M is configurable; and the M subsets of coefficient sets of the V coefficient sets corresponding to a v-th layer are in one-to-one correspondence with M vectors comprised in a vector group of the V vector groups corresponding to the v-th layer.

In FIG. 11, a vector group #(v-1) represents a vector group of the V vector groups corresponding to the v-th layer, the coefficient set #(v-1) represents a coefficient set of the V coefficient sets corresponding to the v-th layer, and v is any positive integer not greater than V; the N3 matrices are represented by matrix #0,..., matrix #(N3-1); and the N3 PRB groups are represented by PRB group #0,..., PRB group #(N3-1), the M vectors in the vector group #(v-1) are represented by vector #0,..., vector #(M-1), and the M subsets in the coefficient set #(v-1) are represented by subset #0,..., subset #(M-1).

As one embodiment, the N3 matrices are used for precoding of the N3 PRB groups respectively.

As one embodiment, the N3 matrices are precoding matrices of the N3 PRB groups respectively.

As one embodiment, a number of rows of each matrix of the N3 matrices is equal to a number of ports of an RS resource in the first RS resource set, and a number of columns is equal to V.

As one embodiment, V columns of each matrix of the N3 matrices are precoding vectors for V layers of one PRB group of the N3 PRB groups respectively.

As one embodiment, the N3 matrices depend on L vectors, the V vector groups and the V coefficient sets.

As one embodiment, a given matrix is any matrix of the N3 matrices; the given matrix comprises V columns, a v-th column in the given matrix is obtained by combining and concatenating the L vectors after weighting, and coefficients in the coefficient set #(v-1) and elements in the vectors in the vector group #(v-1) are used for weighting the L vectors; and v is any positive integer not greater than V.

As one sub-embodiment of the above embodiment, the coefficients in the coefficient set #(v-1) and the elements in the vectors in the vector group #(v-1) are subjected to mathematical operations to obtain the weighting coefficients used for the weighting.

As one sub-embodiment of the above embodiment, the coefficients in the coefficient set #(v-1) and a t-th element of the vectors in the vector group #(v-1) are subjected to mathematical operations to obtain the weighting coefficients used for weighting; and the given matrix is for a t-th PRB group of the N3 PRB groups.

As one embodiment, the given matrix is any matrix of the N3 matrices; the given matrix comprises V columns, and the v-th column in the given matrix is obtained by a first matrix, a given coefficient matrix and a second vector through matrix operations; the first matrix is equal to a Kronecker product of a second matrix and $\begin{bmatrix} 1 & 0 \\ 0 & 1 \end{bmatrix}$, the second matrix is composed of the L vectors as L columns, the given coefficient matrix depends on the coefficients in the coefficient set #(v-1), and the second vector depends on the vectors in the vector set #(v-1); and v is any positive integer not greater than V.

As one sub-embodiment of the above embodiment, the second vector is one column vector.

As one sub-embodiment of the above embodiment, the second vector depends on the t-th element of the vectors in the vector group #(v-1), and the given matrix is for the t-th PRB group of the N3 PRB groups.

As one sub-embodiment of the above embodiment, the second vector is composed of the t-th element of each vector in the vector group #(v-1).

As one sub-embodiment of the above embodiment, each element in the second vector is obtained by multiplying the t-th element of one vector in the vector group #(v-1) by one factor.

As one sub-embodiment of the above embodiment, non-zero elements in the given coefficient matrix are composed of non-zero coefficients in the coefficient set #(v-1).

As one sub-embodiment of the above embodiment, the given coefficient matrix comprises M columns, and the non-zero elements in the M columns are composed of non-zero coefficients in M subsets in the coefficient set #(v-1) respectively.

## Embodiment 12

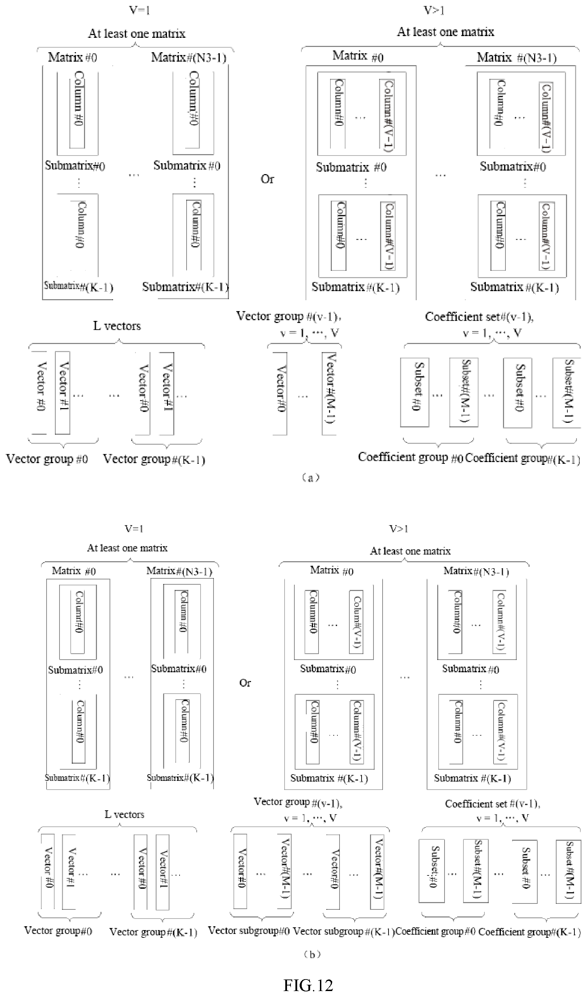

Embodiment 12 illustrates a schematic diagram of at least one matrix according to one embodiment of the present application, as shown in FIG. 12. In Embodiment 12, the at least one matrix comprises N3 matrices, and the N3 matrices are for N3 PRB groups respectively; each matrix of the N3 matrices comprises K submatrices, and each submatrix of the K submatrices comprises V columns; L vectors comprise K vector groups, and K submatrices in each matrix of the N3 matrices are in one-to-one correspondence with the K vector groups; each coefficient set of V coefficient sets comprises K coefficient groups, and each coefficient group comprises M subsets; and the K coefficient groups comprised in each coefficient set of the V coefficient sets is in one-to-one correspondence with the K vector groups.

In FIG. 12, a vector group #(v-1) represents a vector group of the V vector groups corresponding to a v-th layer, a coefficient set #(v-1) represents a coefficient set of the V coefficient sets corresponding to the v-th layer, and v is any positive integer not greater than V; the N3 matrices are represented by matrix #0,..., matrix #(N3-1); the N3 PRB groups are represented by PRB group #0, ..., PRB group... #(N3-1), the K submatrices of each matrix of the N3 matrices are represented by submatrix #0, ..., submatrix #(K-1), the K coefficient groups in the coefficient set #(v-1) are represented by coefficient group #0, ..., coefficient group #(K-1), and the M subsets in each coefficient group are represented by subset #0, ..., subset #(M-1); when V=1, V columns in each submatrix of the K submatrices is represented by column #0; and when V>1, the V columns in each submatrix of the N3 matrices are represented by column #0,..., column #(V-1).

As one embodiment, a number of vectors comprised in each vector group of the V vector groups is equal to M, as shown in FIG. 12(a); and the M subsets in any coefficient group in the coefficient set #(v-1) are in one-to-one correspondence with M vectors in the vector group #(v-1). In FIG. 12(a), the M vectors in the vector group #(v-1) are represented by vector #0,..., vector #(M-1).

As one embodiment, each vector group of the V vector groups comprises K vector subgroups, and the number of vectors comprised in each vector subgroup is equal to M, as shown in FIG. 12(b); and the K vector subgroups comprised in each vector group of the V vector groups are in one-to-one correspondence with the K vector groups, the K vector subgroups in the vector group #(v-1) are in one-to-one correspondence with the K coefficient groups in the coefficient set #(v-1), and the M subsets in any coefficient group in the coefficient set #(v-1) are in one-to-one correspondence with the M vectors in the corresponding vector subgroup in the vector group #(v-1). In FIG. 12(b), the K vector subgroups in the vector group #(v-1) are represented by vector subgroup #0,..., vector subgroup #(K-1), and the M vectors in each vector subgroup are represented by vector #0,..., vector #(M-1).

As one embodiment, the N3 matrices are used for precoding of the N3 PRB groups respectively.

As one embodiment, a number of rows of each matrix of the N3 matrices is equal to a sum of a number of ports of K RS resources in a first RS resource set, and a number of columns is equal to V.

As one embodiment, the N3 matrices depend on the L vectors, the V vector groups and the V coefficient sets.

As one embodiment, any submatrix in any matrix of the N3 matrices depends on a corresponding vector group of the K vector groups.

As one embodiment, a given submatrix is any submatrix in any matrix of the N3 matrices, a v-th column of the given submatrix is obtained by weighing, combining and concatenating vectors in a first given vector group, and coefficients in a given coefficient group and elements in vectors in a second given vector group are used for weighting the vectors in the first given vector group; and v is any positive integer not greater than V.

As one sub-embodiment of the above embodiment, the coefficients in the given coefficient group and the elements in the vectors in the second given vector group are subjected to mathematical operations to obtain the weighting coefficients used for weighting.

As one sub-embodiment of the above embodiment, the coefficients in the given coefficient group and a t-th element of the vectors in the second given vector group are subjected to mathematical operations to obtain the weighting coefficients used for weighting; and the given submatrix is one submatrix of a matrix of the N3 matrices for a t-th PRB group of the N3 PRB groups.

As one embodiment, the given matrix is any matrix of the N3 matrices, and the given submatrix is any submatrix of the given matrix; the v-th column of the given submatrix is obtained by matrix operations on a first matrix, a given coefficient matrix, and a second vector; the first matrix is equal to a Kronecker product of a second matrix and $\begin{bmatrix} 1 & 0 \\ 0 & 1 \end{bmatrix}$, the second matrix is composed of vectors in the first given vector group as columns, the given coefficient matrix depends on the given coefficient group, and the second vector depends on the t-th element of the vectors in the second given vector group; and v is any positive integer not greater than V.

As one sub-embodiment of the above embodiment, the second vector is one column vector.

As one sub-embodiment of the above embodiment, the second vector is composed of the t-th element of each vector in the second given vector group.

As one sub-embodiment of the above embodiment, each element in the second vector is obtained by multiplying the t-th element of one vector in the second given vector group by one factor.

As one sub-embodiment of the above embodiment, non-zero elements in the given coefficient matrix are composed of non-zero coefficients in the given coefficient group.

As one sub-embodiment of the above embodiment, the given coefficient matrix comprises M columns, and the non-zero elements in the M columns are composed of non-zero coefficients in M subsets of the given coefficient group respectively.

As one embodiment, the first given vector group is a vector group of the K vector groups corresponding to the given submatrix, and the given coefficient group is a coefficient group corresponding to the first given vector group in the coefficient set #(v-1).

As one sub-embodiment of the above embodiment, the second given vector group is the vector group #(v-1).

As one sub-embodiment of the above embodiment, the second given vector subgroup is a vector subgroup corresponding to the first given vector group in the vector group #(v-1).

## Embodiment 13

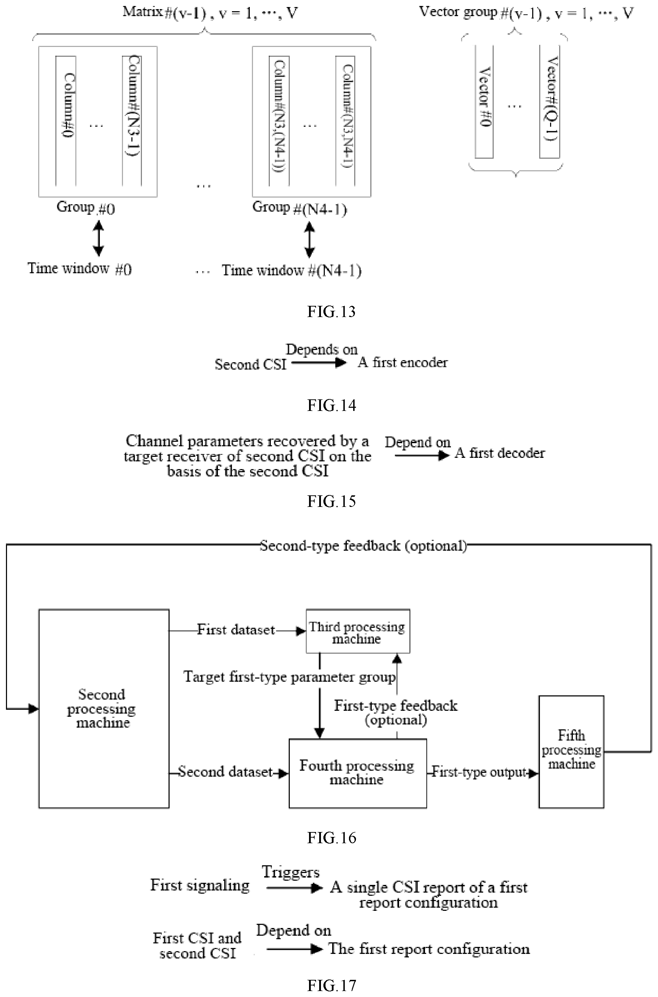

Embodiment 13 illustrates a schematic diagram of at least one matrix according to one embodiment of the present application, as shown in FIG. 13. In Embodiment 13, the at least one matrix depends on a first vector group set; the at least one matrix comprises V matrices, the V matrices are for V layers respectively, and a number of columns of each matrix of the V matrices is equal to N3 multiplied by N4; all columns of each matrix of the V matrices are divided into N4 groups, the N4 groups are for N4 time windows respectively, and the N4 time windows are mutually pairwise orthogonal; N3 columns in each group are for N3 PRB groups respectively; and a number of vector groups in the first vector group set is equal to V, V vector groups in the first vector group set are for V layers respectively, a number of vectors comprised in each vector group in the first vector group set is equal to Q, and a dimension of any vector in the first vector group set are equal to N4.

In FIG. 13, a matrix #(v-1) represents a matrix of the V matrices corresponding to a v-th layer, a vector group #(v-1) represents a vector group corresponding to a v-th layer in the first vector group set, and v is any positive integer not greater than V; the N4 time windows are represented by time window #0,..., time window #(N4-1); the N4 groups of columns in the matrix #(v-1) are represented by group #0,..., group #(N4-1), and the N3 columns in each group are represented by column #0,..., column #(N3-1); and Q vectors in the vector group #(v-1) are represented by vector #0,..., vector #(Q-1).

As one embodiment, a number of rows of each matrix of the V matrices is equal to a number of ports of an RS resource in a first RS resource set.

As one embodiment, the N3 columns in an i-th group of the matrix #(v-1) are precoding vectors for the v-th layer of the N3 PRB groups in an i-th time window respectively; and i is any positive integer not greater than N4.

As one embodiment, the V matrices depend on the L vectors, the V vector groups, the first vector group set and the V coefficient sets.

As one embodiment, the matrix #(v-1) is obtained by a first matrix, a given coefficient matrix and a fourth matrix through matrix operations; the first matrix is equal to a Kronecker product of a second matrix and $\begin{bmatrix} 1 & 0 \\ 0 & 1 \end{bmatrix}$, the second matrix is composed of the L vectors as L columns, the given coefficient matrix depends on coefficients in a coefficient set of the V coefficient sets corresponding to the v-th layer, and the fourth matrix depends on a vector group of the V vector groups corresponding to the v-th layer, and the vector group #(v-1); and v is any positive integer not greater than V.

As one sub-embodiment of the above embodiment, the fourth matrix depends on a Kronecker product of a fifth matrix and a sixth matrix; and the fifth matrix is composed of vectors in a vector group corresponding to the v-th layer in the V vector groups as column vectors, and the sixth matrix is composed of vectors in the vector group #(v-1) as column vectors.

As one preferred embodiment of the above sub-embodiment, the fourth matrix is obtained by multiplying each element of all or part of elements of a matrix obtained by the Kronecker product of the fifth matrix and sixth matrix by one factor.

## Embodiment 14

Embodiment 14 illustrates a schematic diagram of second CSI depending on a first encoder according to one embodiment of the present application, as shown in FIG. 14.

As one embodiment, a generator used for generating the second CSI is the first encoder.

As one embodiment, the second CSI depends on an output of the first encoder.

As one embodiment, the output of the first encoder is used for generating the second CSI.

As one embodiment, the output of the first encoder comprises the second CSI.

As one embodiment, the second CSI is the output of the first encoder.

As one embodiment, the output of the first encoder is quantized for generating the second CSI.

As one embodiment, the output of the first encoder is subjected to part of or all quantization, Cyclic Redundancy Check (CRC) attachment, channel coding and rate matching to generate the second CSI.

As one embodiment, the output of the first encoder comprises compressed CSI.

As one embodiment, the output of the first encoder is used for determining at least one precoding matrix.

As one embodiment, an input of the first encoder depends on channel measurements obtained on the basis of a first RS resource set.

As one embodiment, a first node obtains channel measurements for calculating the input of the first encoder on the basis of the first RS resource set.

As one embodiment, the first node obtains channel measurements for calculating the input of the first encoder on the basis of transmission occasions of CSI reference resources not later than first CSI in the first RS resource set.

As one embodiment, the first node obtains channel measurements for calculating the input of the first encoder on the basis of transmission occasions of CSI reference resources not later than the second CSI in the first RS resource set.

As one embodiment, the input of the first encoder comprises CSI.

As one embodiment, the input of the first encoder comprises a channel matrix.

As one embodiment, the input of the first encoder comprises an original channel matrix.

As one embodiment, the input of the first encoder comprises an eigenvector.

As one embodiment, the input of the first encoder comprises an uncompressed channel matrix or an eigenvector.

As one embodiment, the input of the first encoder comprises all or part of information obtained after matrix decomposition of a channel matrix.

As one embodiment, measurements for the first RS resource set are used for generating at least one channel matrix, and the at least one channel matrix is used for generating the input of the first encoder.

As one embodiment, the at least one channel matrix is available only to the first node.

As one embodiment, the first CSI and the second CSI depend on the at least one channel matrix.

As one embodiment, the at least one channel matrix is used for generating the first CSI and the second CSI.

As one embodiment, the input of the first encoder comprises the at least one channel matrix.

As one embodiment, the input of the first encoder comprises information of elements in the at least one channel matrix.

As one embodiment, the input of the first encoder comprises an eigenvector of the at least one channel matrix.

As one embodiment, the input of the first encoder comprises all or part of information obtained after matrix decomposition of the at least one channel matrix.

As one embodiment, the channel parameters recovered by a target receiver of the second CSI on the basis of the output of the first encoder are unknown to the first node.

As one embodiment, the output of the first encoder does not belong to CSI defined in 3GPP Rel-17, or CSI defined by a previous version of 3GPP Rel-17.

As one embodiment, the first encoder is nonlinear.

As one embodiment, the first encoder is non-codebook.

As one embodiment, a load size of any input of the first encoder is greater than a load size of the output of the first encoder corresponding to the any input.

As one embodiment, the first encoder is based on artificial intelligence or machine learning.

As one embodiment, the first encoder is based on a neural network.

As one embodiment, the first encoder comprises a neural network for CSI compression.

As one embodiment, the first encoder comprises an encoder of a neural network for CSI compression.

As one embodiment, the first encoder comprises a Conventional Neural Networks (CNN)-based encoder for CSI compression.

As one embodiment, training for obtaining the first encoder is performed at the first node.

Benefits of the above method comprise: avoiding overheads required to transmit the first encoder.

As one embodiment, the training for obtaining the first encoder is performed at the target receiver of the second CSI.

The benefits of the above method comprise: supporting joint training and optimizing the performance of CSI compression.

As one embodiment, the target receivers of the first node and the second CSI adopt the same training model.

The benefits of the above method comprise: improving the performance.

As one embodiment, the target receivers of the first node and the second CSI adopt different training models.

As one embodiment, when the target receivers of the first node and the second CSI adopt different training models, their understanding for the second CSI may be different.

The benefits of the above method comprise: increasing the degree of freedom of hardware manufacturers.

As one embodiment, the training model comprises a model for obtaining the training of the first encoder.

As one embodiment, the training model comprises a model for obtaining the training of a first decoder.

As one embodiment, the training is based on a training dataset, measurements for a first-type wireless signal are used for generating the training dataset, and the first-type wireless signal comprises a downlink RS.

As one embodiment, the first encoder comprises K1 subprocessings, and K1 is a positive integer greater than 1; and the K1 subprocessings comprises one or more of convolution, pooling, concatenation or activation.

As one embodiment, one subprocessing of the K1 subprocessings comprises a fully connected layer.

As one embodiment, one subprocessing of the K1 subprocessings comprises a pooling layer.

As one embodiment, one subprocessing of the K1 subprocessing comprises at least one convolutional layer.

As one embodiment, one subprocessing of the K1 subprocessings comprises at least one encoding layer.

As one embodiment, two subprocessings of the K1 subprocessings comprise the fully connected layer and at least one encoding layer, respectively.

As one embodiment, one encoding layer comprises at least one convolutional layer and one pooling layer.

As one embodiment, in a convolutional layer, at least one convolution kernel is used for convolving the input of the first encoder to generate a corresponding feature map, and at least one feature map outputted by the convolutional layer is reshaped into one vector and inputted to the fully connected layer; and the fully connected layer converts the one vector into the output of the first encoder.

As one embodiment, part or all of a convolution kernel size, a number of convolutional layers, a convolution step size, a pooling kernel size, a pooling kernel step size, a pooling function, an activation function or a number of feature maps of the first encoder are obtained through training.

As one embodiment, part or all of the convolution kernel, the pooling kernel, the pooling function, the activation function, parameters of the pooling function or parameters of the activation function of the first encoder are obtained through training.

As one embodiment, the input of the first encoder depends on the first CSI.

The benefits of the above method comprise: improving the accuracy of the second CSI and optimizing the performance of CSI reports.

As one embodiment, measurements for the first RS resource set are used for generating at least one channel matrix, a first vector set depends on the first CSI, the first vector set is used for determining at least one subspace, and a projection of a channel matrix of the at least one channel matrix on the at least one subspace is used for determining the input of the first encoder.

As one embodiment, measurements for the first RS resource set are used for generating at least one channel matrix, the first vector set and a first coefficient set depend on the first CSI, the first vector set and the first coefficient set are used for determining at least one subspace, and the projection of the channel matrix of the at least one channel matrix on the at least one subspace is used for determining the input of the first encoder.

As one embodiment, the at least one subspace is spanned by a plurality of vectors in the first vector set.

As one embodiment, the at least one subspace is spanned by weighting a plurality of vectors in the first vector set by coefficients in the first coefficient set.

As one embodiment, measurements for the first RS resource set are used for generating at least one channel matrix, the first vector set depends on the first CSI, the first vector set is used for determining at least one reference matrix, and the at least one channel matrix and the at least one reference matrix are used for generating the input of the first encoder through mathematical operations and matrix operations.

As one embodiment, the first vector set comprises L vectors.

As one embodiment, the first vector set comprises part of or all vectors in V vector groups.

As one embodiment, the first vector set comprises part of or all vectors in a first vector group set.

As one embodiment, the first coefficient set comprises part of coefficients in V coefficient sets.

As one embodiment, the at least one channel matrix is used for generating the first CSI.

As one embodiment, the at least one channel matrix is used for generating the first vector set.

As one embodiment, the first CSI is generated using the at least one channel matrix as an input according to 3GPP R17 or a codebook prior to R17.

As one embodiment, the first CSI is generated using the at least one channel matrix as an input according to a Type II codebook.

As one embodiment, the training used for obtaining the first encoder depends on a codebook on which the first CSI is based.

As one embodiment, the training used for obtaining the first encoder depends on the Type II codebook on which the first CSI is based.

The benefits of the above method comprise: optimizing artificial intelligence- or machine learning-based CSI, and optimizing the accuracy of CSI reports.

As one embodiment, at least one target matrix depends on the at least one channel matrix, and the first vector set is generated using the at least one channel matrix as an input according to the Type II codebook; and channel parameters recovered on the basis of the output of the first encoder and the first vector set are used together for generating the at least one matrix, and the purpose of the training used for obtaining the first encoder comprises minimizing a difference between the at least one matrix and the at least one target matrix.

As one embodiment, the at least one target matrix is the at least one channel matrix.

As one embodiment, the at least one target matrix is obtained from the at least one channel matrix through matrix decomposition and/or other matrix operations and mathematical operations.

As one embodiment, the at least one target matrix is a precoding matrix.

Generally speaking, how to generate the input of the first encoder is determined by a manufacturer. Some non-limiting implementations are introduced below:

As one embodiment, the first node measures an RS transmitted in the first RS resource set to obtain a channel matrix $\{H_w, w = 1, ..., W\}$; andthe first node operates $\{H_w\}$ to obtain the input of the first encoder, and the operation includes, but is not limited to, matrix decomposition, projection and other matrix operations and mathematical operations.

As one embodiment, the first node decomposes each matrix in $\{H_w\}$ to obtain $\{H_w = U_w \Sigma_w V_w^H\}$, and the input of the first encoder depends on at least one of $\{U_w\}$, $\{\Sigma_w\}$ or $\{V_w\}$.

As one embodiment, the first node decomposes each matrix in $\{H_w^H H_w\}$ to obtain $\{H_w^H H_w = U_w \Sigma_w U_w^H\}$, and the input of the first encoder depends on $\{\Sigma_w\}$ and/or $\{U_w\}$.

As one embodiment, the first node decomposes each matrix in $\{H_w^H H_w\}$ to obtain $\{H_w^H H_w = U_w \Sigma_w U_w^H\}$, and then performs matrix operation on $[u_1 ... u_W]$ to obtain $W_1$, $W_2$ and $W_3$; and the input of the first encoder depends on at least $W_2$ of $W_1$, $W_2$ and $W_3$, wherein $u_w$, $w = 1, ..., W$ is one column of $U_w$.

As one sub-embodiment of the above embodiment, $[u_1 \cdots u_W] = W_1 W_2 W_3^H$.

As one sub-embodiment of the above embodiment, any two columns of $W_1$ are orthogonal to each other, and any two columns of $W_3$ are orthogonal to each other.

As one embodiment, the first node decomposes $\{W_w^{(1)} H_w\}$, $\{H_w W_w^{(2)}\}$, $W_4[u_1 \cdots u_W]$ or $[u_1 \cdots u_W] W_5$, and the input of the first encoder depends on a decomposed result; and $\{W_w^{(1)}, w = 1, ..., W\}$, $\{W_w^{(2)}, w = 1, ..., W\}$, $W_4$ and $W_5$ depend on $\{H_w\}$.

## Embodiment 15

Embodiment 15 illustrates a schematic diagram of a first decoder according to one embodiment of the present application, as shown in FIG. 15. In Embodiment 15, a target receiver of second CSI depends on the first decoder on the basis of channel parameters recovered by the second CSI, and the first decoder is obtained through training.

As one embodiment, the first decoder and a first encoder are obtained through different training.

As one embodiment, the first decoder and the first encoder are obtained through independent training.

As one embodiment, benefits of the above method comprise: target receivers of a first node and the second CSI can train the first encoder and the first decoder respectively, which saves air interface overheads, has better flexibility, can adapt to different terminals, and has better forward compatibility.

As one embodiment, the first decoder and the first encoder are obtained through joint training.

As one embodiment, the benefits of the above method comprise: optimizing performance.

As one embodiment, the training of the first decoder depends on the first encoder.

As one embodiment, the target receiver of the second CSI trains the first decoder according to an output of the first encoder.

As one embodiment, the target receiver of the second CSI trains the first decoder using the output of the first encoder as an input of the first decoder.

As one embodiment, an output of the first decoder comprises the channel parameters recovered by the target receiver of the second CSI on the basis of the second CSI.

As one embodiment, the output of the first decoder is used for generating the channel parameters recovered by the target receiver of the second CSI on the basis of the second CSI.

## Embodiment 16

Embodiment 16 illustrates a schematic diagram of an artificial intelligence- or machine learning-based processing system according to one embodiment of the present application, as shown in FIG. 16. FIG. 16 comprises a second processing machine, a third processing machine, a fourth processing machine and a fifth processing machine. In Embodiment 16, the second processing machine sends a first dataset to the third processing machine and sends a second dataset to the fourth processing machine; the third processing machine generates a target first-type parameter group according to the first dataset, and the third processing machine sends the generated target first-type parameter group to the fourth processing machine; and the fourth processing machine processes the second dataset using the target first-type parameter group to obtain a first-type output, and the fourth processing machine sends the first-type output to the fifth processing machine. In FIG. 16, a first-type feedback and a second-type feedback are optional.

As one embodiment, the fourth processing machine comprises a first encoder.

As one embodiment, the fifth processing machine comprises a first decoder.

As one embodiment, the fourth processing machine sends the first-type feedback to the third processing machine, and the first-type feedback is used for triggering recalculation or update of the target first-type parameter group.

As one embodiment, the fifth processing machine sends the second-type feedback to the second processing machine, the second-type feedback is used for generating the first dataset or the second dataset, or the second-type feedback is used for triggering the sending of the first dataset or the second dataset.

As one embodiment, the second processing machine generates the first dataset and the second dataset according to measurements for a first-type wireless signal, and the first-type wireless signal comprises a downlink RS.

As one embodiment, the fourth processing machine belongs to a first node and the fifth processing machine belongs to a second node.

As one embodiment, the third processing machine belongs to the first node.

The above embodiments avoid transmitting the first dataset to the second node.

As one embodiment, the third processing machine belongs to the second node.

The above embodiments support joint training, thereby optimizing performance.

As one embodiment, the first dataset comprises training data, the second dataset comprises inference data, the third processing machine is used for model training, and the trained model is described by the target first-type parameter group.

The description of the above training applies to the first encoder and the first decoder in the present application.

As one embodiment, the fourth processing machine constructs a model according to the target first-type parameter group, and then inputs the second dataset into the constructed model to obtain the first-type output.

As one embodiment, the first encoder is described by the target first-type parameter group.

As one embodiment, the target first-type parameter group is used for constructing the first encoder.

As one embodiment, the fourth processing machine generates a recovery dataset according to the first-type output, and an error between the recovery dataset and the second dataset is used for generating the first-type feedback.

As one embodiment, the first-type feedback is used for reflecting the performance of the trained model; and when the performance of the trained model cannot satisfy the requirements, the third processing machine recalculates the target first-type parameter group.

As one embodiment, when the error is too large or has not been updated for too long, the performance of the trained model is considered to be unable to satisfy the requirements.

As one embodiment, the fourth processing machine belongs to the second node, and the first node reports the target first-type parameter group to the second node.

As one embodiment, the target first-type parameter group comprises: one or more of a convolution kernel size, a number of convolutional layers, a convolution step size, a pooling kernel size, a pooling kernel step size, a pooling function, an activation function or a number of feature maps.

As one embodiment, the target first-type parameter group comprises one or more of a convolution kernel, a pooling kernel, the pooling function, the activation function, parameters of the pooling function, or parameters of the activation function.

## Embodiment 17

Embodiment 17 illustrates a schematic diagram of first signaling, a first report configuration, first CSI and second CSI according to one embodiment of the present application, as shown in FIG. 17. In Embodiment 17, the first signaling triggers a single CSI report of the first report configuration, and the first CSI and the second CSI both depend on the first report configuration.

As one embodiment, the first signaling comprises physical layer signaling.

As one embodiment, the first signaling comprises Layer 1 (L1) signaling.

As one embodiment, the first signaling comprises Downlink Control Information (DCI).

As one embodiment, the first signaling is one piece of DCI.

As one embodiment, the first signaling is DCI used for an uplink grant.

As one embodiment, the first signaling is a DCI format 0_1 or a DCI format 0_2.

As one embodiment, a Cyclic Redundancy Check (CRC) of the first signaling is scrambled by a Cell (C)-Radio Network Temporary Identifier (RNTI).

As one embodiment, the CRC of the first signaling is scrambled by a Modulation and Coding Scheme (MCS)-C-RNTI.

As one embodiment, the CRC of the first signaling is scrambled by a Configured Scheduling (CS)-RNTI.

As one embodiment, the first signaling comprises a Medium Access Control layer Control Element (MAC CE).

As one embodiment, a DCI field CSI request of the first signaling triggers the single CSI report of the first report configuration.

As one embodiment, the first signaling indicates a first trigger state, and the first trigger state indicates the first report configuration.

As one embodiment, the DCI field CSI request of the first signaling indicates the first trigger state.

As one embodiment, the first trigger state is one CSI trigger state.

As one embodiment, the first trigger state is configured by RRC signaling.

As one embodiment, the first trigger state is configured by a higher layer parameter 'CSI-Aperiodic-TriggerStateList'.

As one embodiment, the higher layer parameter 'CSI-AperiodicTriggerStateList' configures at least one CSI trigger state, and the first trigger state is one of the at least one CSI trigger state.

As one embodiment, the first trigger state comprises information in one CSI-AperiodicTriggerState within CSI-AperiodicTriggerStateList IE.

As one embodiment, the first signaling triggers the single CSI report of the first report configuration by indicating the first trigger state.

As one embodiment, the first signaling indicates a code point of a DCI field 'CSI request' mapped to the first trigger state.

As one embodiment, a MAC CE is used for mapping the first trigger state to the code point of the DCI field 'CSI request'.

As one embodiment, a value of the DCI field 'CSI request' in the first signaling is equal to the code point of the DCI field 'CSI request' mapped to the first trigger state.

As one embodiment, the value of the DCI field 'CSI request' in the first signaling is equal to i, and the first trigger state is an i-th CSI trigger state of at least one CSI trigger state configured by a higher layer parameter 'CSI-AperiodicTriggerStateList'; and i is a positive integer.

As one embodiment, the first trigger state indicates CSI-ReportConfigId of the first report configuration.

As one embodiment, the first report configuration is one CSI report configuration.

As one embodiment, the first report configuration is one CSI Reporting setting.

As one embodiment, the first report configuration is one CSI-ReportConfig IE.

As one embodiment, the first report configuration is a CSI Reporting setting configured by one CSI-ReportConfig IE.

As one embodiment, the first report configuration is identified by one CSI-ReportConfigId.

As one embodiment, the first report configuration is carried by Radio Resource Control (RRC) signaling.

As one embodiment, the first report configuration is carried by at least one RRC Information Element (IE).

As one embodiment, the first report configuration is configured by at least one RRC IE.

As one embodiment, the first report configuration is one RRC IE.

As one embodiment, the first report configuration is carried by one CSI-ReportConfig IE.

As one embodiment, the first report configuration is configured by one CSI-ReportConfig IE.

As one embodiment, the first report configuration is carried by a CSI-MeasConfig IE.

As one embodiment, the first report configuration is configured by the CSI-MeasConfig IE.

As one embodiment, the first report configuration is aperiodic.

As one embodiment, the first report configuration is semi-persistent.

As one embodiment, the first CSI and the second CSI are generated according to the first report configuration.

As one embodiment, the first report configuration indicates (one or more) RS resources for obtaining channel measurements for calculating the first CSI and the second CSI.

As one embodiment, the first report configuration indicates (one or more) CSI-RS resources and/or Channel State Information-Interference Measurement (CSI-IM) resources for obtaining channel measurements for calculating the first CSI and the second CSI.

As one embodiment, the first report configuration indicates a report quantity of the first CSI and the second CSI.

As one embodiment, the first report configuration indicates frequency domain resources related to the first CSI and the second CSI.

As one embodiment, the first report configuration indicates the values of part of or all higher layer parameters corresponding to the first CSI and the second CSI in higher layer parameters "resourcesForChannelMeasurement", "csi-IM-ResourcesForInterference", "reportQuantity", "nzp-CSI-RS-ResourcesForInterference", "reportConfigType", "reportFreqConfiguration", "timeRestrictionForChannelMeasurements", "timeRestrictionForInterferenceMeasurements", "subbandSize", or "codebookConfig".

As one embodiment, the first report configuration indicates a first RS resource set.

As one embodiment, the first report configuration indicates that the first RS resource set is used for channel measurements.

As one embodiment, the RS resources indicated by the first report configuration and used for channel measurements comprise the first RS resource set.

As one embodiment, a field 'resourcesForChannelMeasurement' configured by the first report configuration indicates the first RS resource set.

As one embodiment, RS resources indicated by the first report configuration and used for channel measurements comprise a plurality of RS resource sets, the plurality of RS resource sets comprise the first RS resource set, and the first trigger state indicates the first RS resource set from the plurality of RS resource sets.

As one embodiment, the first CSI and the second CSI depending on the first report configuration refers to: the first CSI and the second CSI are CSI comprised in the single CSI report of the first report configuration respectively.

As one embodiment, the first CSI and the second CSI depending on the first report configuration refers to: the first CSI and the second CSI are generated according to the configuration of the first report configuration.

As one embodiment, the first CSI and the second CSI depending on the first report configuration refers to: the first report configuration indicates RS resources used for obtain channel measurements for calculating the first CSI and the second CSI.

As one embodiment, the first CSI and the second CSI depending on the first report configuration refers to: the first report configuration indicates the frequency domain resources related to the first CSI and the second CSI.

As one embodiment, W subbands are configured by the first report configuration.

As one embodiment, candidates for V are configured by the first report configuration.

As one embodiment, R is configured by the first report configuration.

As one embodiment, the first signaling triggers at least the second CSI of the first CSI and the second CSI.

As one embodiment, the first CSI is carried by the single CSI report of the first report configuration, and the second CSI is carried by the single CSI report of the first report configuration.

As one embodiment, the first CSI and the second CSI are carried by the same single CSI report of the first report configuration.

As one embodiment, the first CSI and the second CSI are carried by two different CSI reports of the first report configuration.

As one embodiment, the single CSI report of the first report configuration triggered by second signaling carries at least the second CSI of the first CSI and the second CSI.

As one embodiment, the first signaling triggers the first CSI and the second CSI.

As one embodiment, the single CSI report of the first report configuration triggered by the second signaling carries the first CSI and the second CSI.

As one embodiment, benefits of the above method comprise: better backward compatibility and minor changes to standards.

As one embodiment, the first signaling triggers only the second CSI of the first CSI and the second CSI.

As one embodiment, the single CSI report of the first report configuration triggered by the second signaling carries only the second CSI of the first CSI and the second CSI.

As one embodiment, the first signaling triggers only the second CSI of the first CSI and the second CSI, the second signaling triggers the first CSI, and the second signaling is earlier than the first signaling.

As one embodiment, the benefits of the above method comprise: more flexible configuration and better optimization of report accuracy and overheads.

As one embodiment, the first signaling indicates whether the single CSI report of the first report configuration triggered by the first signaling comprises the first CSI or comprises only the second CSI of the first CSI and the second CSI.

As one embodiment, the first signaling indicates whether the single CSI report of the first report configuration triggered by the first signaling comprises codebook-based CSI and CSI based on a first encoder, or comprises only the CSI based on the first encoder.

As one embodiment, the second signaling comprises physical layer signaling.

As one embodiment, the second signaling comprises Layer 1 (L1) signaling.

As one embodiment, the second signaling comprises DCI.

As one embodiment, the second signaling is one piece of DCI.

As one embodiment, the second signaling is DCI used for an uplink grant.

As one embodiment, the second signaling is the DCI format 0_1 or the DCI format 0_2.

As one embodiment, a CRC of the second signaling is scrambled by a C-RNT.

As one embodiment, the CRC of the second signaling is scrambled by an MCS-C-RNTI.

As one embodiment, the CRC of the second signaling is scrambled by a CS-RNTI.

As one embodiment, the second signaling comprises a MAC CE.

As one embodiment, the first signaling and the second signaling are two pieces of DCI respectively.

As one embodiment, the second signaling is transmitted on a PDCCH.

As one embodiment, the first signaling triggers a first node to receive an RS in the first RS resource set.

## Embodiment 18

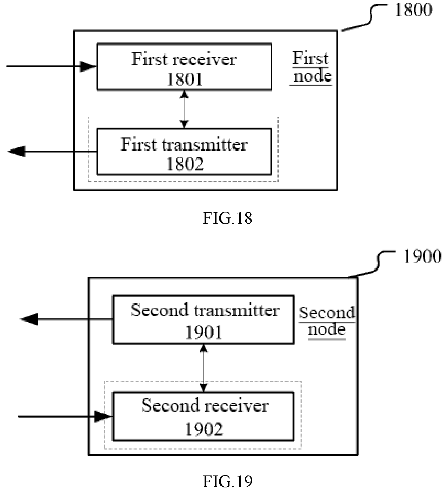

Embodiment 18 illustrates a structural block diagram of a processing apparatus used in a first node according to one embodiment of the present application, as shown in FIG. 18. In FIG. 18, a processing apparatus 1800 in the first node comprises a first receiver 1801 and a first transmitter 1802.

In Embodiment 18, the first receiver 1801 receives an RS in a first RS resource set; and the first transmitter 1802 sends first CSI and second CSI.

In Embodiment 18, at least one matrix depends on the first CSI and the second CSI, and the at least one matrix is used for precoding; and the first CSI and the second CSI both depend on channel measurements obtained on the basis of the first RS resource set, the first CSI is based on a codebook, and the second CSI conforms to at least one of the following:

channel parameters recovered by a target receiver of the second CSI on the basis of the second CSI are unknown to the first node;

a generator used for generating the second CSI is obtained on the basis of training; and

the second CSI does not belong to CSI defined by 3GPP R17 or CSI defined by a previous release of 3GPP R17.

As one embodiment, each matrix of the at least one matrix is one precoding matrix, frequency domain resources related to the first CSI and the frequency domain resources related to the second CSI are both W subbands, and the W subbands are configured by higher layer parameters; and the first RS resource set comprises only one RS resource, or the first RS resource set comprises a plurality of RS resources, and the plurality of RS resources have the same number of ports.

As one embodiment, the second CSI is calculated on the basis of the condition of the first CSI.

As one embodiment, the first CSI is based on a Type II codebook.

As one embodiment, L vectors depend on the first CSI, V coefficient sets depend on the second CSI, and the at least one matrix depends on the L vectors and the V coefficient sets; and L is a positive integer greater than 1, L is configurable, and V is a positive integer.

As one sub-embodiment of the above embodiment, V is a number of layers, and the V coefficient sets are for V layers respectively.

As one embodiment, V vector groups depend on at least one of the first CSI and the second CSI, and V is a positive integer; each vector group of the V vector groups comprises a plurality of vectors, and a number of vectors comprised in each vector group of the V vector groups is configurable; and the at least one matrix depends on the V vector groups.

As one sub-embodiment of the above embodiment, V is a number of layers, and the V vector groups are for V layers respectively.

As one embodiment, a first vector group set depends on at least one of the first CSI and the second CSI, a number of vector groups in the first vector group set is equal to V, and V is a positive integer; the number of vectors comprised in each vector group in the first vector group set is equal to Q, Q is configurable and Q is a positive integer; and the at least one matrix depends on the first vector group set.

As one sub-embodiment of the above embodiment, V is a number of layers, and V vector groups in the first vector group set are for V layers respectively.

As one embodiment, the second CSI depends on a first encoder, and the first encoder is obtained on the basis of training.

As one sub-embodiment of the above embodiment, the generator used for generating the second CSI is the first encoder.

As one embodiment, the first receiver 1801 receives first signaling, and the first signaling triggers a single CSI report of a first report configuration, wherein the first CSI and the second CSI both depend on the first report configuration.

As one embodiment, a first node device is user equipment.

As one embodiment, the first node device is a relay node device.

As one embodiment, the first receiver 1801 comprises at least one of {an antenna 452, a receiving device 454, a receiving processor 456, a multi-antenna receiving processor 458, a controller/processor 459, a memory 460, and a data source 467} in Embodiment 4.

As one embodiment, the first transmitter 1802 comprises at least one of {the antenna 452, the transmitting device 454, a transmitting processor 468, a multi-antenna transmitting processor 457, the controller/processor 459, the memory 460, and the data source 467} in Embodiment 4.

## Embodiment 19

Embodiment 19 illustrates a structural block diagram of a processing apparatus used in a second node according to one embodiment of the present application, as shown in FIG. 19. In FIG. 19, a processing apparatus 1900 in the second node comprises a second transmitter 1901 and a second receiver 1902.

In Embodiment 19, the second transmitter 1901 sends an RS in a first RS resource set; and the second receiver 1902 receives first CSI and second CSI.

In Embodiment 19, at least one matrix depends on the first CSI and the second CSI, and the at least one matrix is used for precoding; and the first CSI and the second CSI both depend on channel measurements obtained on the basis of the first RS resource set, the first CSI is based on a codebook, and the second CSI conforms to at least one of the following:

channel parameters recovered by the second node on the basis of the second CSI are unknown to a sender of the second CSI;

a generator used for generating the second CSI is obtained on the basis of training; and

the second CSI does not belong to CSI defined by 3GPP R17 or CSI defined by a previous release of 3GPP R17.

As one embodiment, each matrix of the at least one matrix is one precoding matrix, frequency domain resources related to the first CSI and frequency domain resources related to the second CSI are both W subbands, and the W subbands are configured by higher layer parameters; and the first RS resource set comprises only one RS resource, or the first RS resource set comprises a plurality of RS resources, and the plurality of RS resources have the same number of ports.

As one embodiment, the second CSI is calculated on the basis of the condition of the first CSI.

As one embodiment, the first CSI is based on a Type II codebook.

As one embodiment, L vectors depend on the first CSI, V coefficient sets depend on the second CSI, and the at least one matrix depends on the L vectors and the V coefficient sets; and L is a positive integer greater than 1, L is configurable, and V is a positive integer.

As one sub-embodiment of the above embodiment, V is a number of layers, and the V coefficient sets are for V layers respectively.

As one embodiment, V vector groups depend on at least one of the first CSI and the second CSI, and V is a positive integer; each vector group of the V vector groups comprises a plurality of vectors, and a number of vectors comprised in each vector group of the V vector groups is configurable; and the at least one matrix depends on the V vector groups.

As one sub-embodiment of the above embodiment, V is a number of layers, and the V vector groups are for V layers respectively.

As one embodiment, the first vector group set depends on at least one of the first CSI and the second CSI, a number of vector groups in the first vector group set is equal to V, and V is a positive integer; the number of vectors comprised in each vector group in the first vector group set is equal to Q, Q is configurable and Q is a positive integer; and the at least one matrix depends on the first vector group set.

As one sub-embodiment of the above embodiment, V is a number of layers, and V vector groups in the first vector group set are for V layers respectively.

As one embodiment, the second CSI depends on a first encoder, and the first encoder is obtained on the basis of training.

As one sub-embodiment of the above embodiment, the generator used for generating the second CSI is the first encoder.

As one embodiment, the second transmitter sends first signaling, and the first signaling triggers a single CSI report of a first report configuration, wherein the first CSI and the second CSI both depend on the first report configuration.

As one embodiment, the second node is one base station.

As one embodiment, the second node is user equipment.

As one embodiment, the second node is a relay node.

As one embodiment, the second transmitter 1901 comprises at least one of {an antenna 420, a transmitting device 418, a transmitting processor 416, a multi-antenna transmitting processor 471, a controller/-processor 475, and a memory 476} in Embodiment 4.

As one embodiment, the second receiver 1902 comprises at least one of {the antenna 420, the receiving device 418, a receiving processor 470, a multi-antenna transmitting processor 471, the controller/processor 475, and the memory 476} in Embodiment 4.

Those ordinary skilled in the art can understand that all or part of the steps in the above method can be completed by instructing relevant hardware through a program, and the program can be stored in a computer-readable storage medium, such as a read-only memory, a hard disk or an optical disc. Optionally, all or part of the steps in the above embodiments can also be implemented using one or more integrated circuits. Accordingly, each module element in the above embodiments can be implemented in the form of hardware or implemented in the form of a software function module. The present application is not limited to any specific form of software and hardware combination. The user equipment, the terminals and the UE in the present application include but are not limited to drones, communication modules on drones, remote-controlled airplanes, aircrafts, small airplanes, mobile phones, tablet computers, laptops, vehicle-mounted communication devices, means of transportation, vehicles, RSUs, wireless sensors, Internet cards, Internet of Things terminals, RFID terminals, NB-IOT terminals, Machine Type Communication (MTC) terminals, enhanced MTC (eMTC) terminals, data cards, Internet cards, vehicle-mounted communication devices, low-cost mobile phones, low-cost tablet computers, and other wireless communication devices. The base stations or system devices in the present application include, but are not limited to, macrocellular base stations, microcellular base stations, pico cellular base stations, femtocells, relay base stations, eNBs, gNBs, Transmitter Receiver Points (TRPs), GNSS, relay satellites, satellite base stations, aerial base stations, Road Side Units (RSUs), drones, and test devices, such as a transceiving apparatus or a signaling tester and other wireless communication devices that simulate some functions of the base station.

Those skilled in the art should understand that the present invention can be implemented in other specified forms without departing from the core or basic features. Therefore, the embodiments disclosed currently should be regarded as descriptive rather than restrictive in any way. The scope of the invention is determined by the appended claims rather than the preceding description, and all changes within their equivalent meanings and areas are deemed to be comprised therein.

**Claims**

1. A first node for wireless communication, comprising:

   a first receiver receiving an RS in a first RS resource set; and
   a first transmitter sending first CSI and second CSI, wherein at least one matrix depends on the first CSI and the second CSI, and the at least one matrix is used for precoding,

wherein the first CSI and the second CSI both depend on channel measurements obtained on the basis of the first RS resource set, the first CSI is based on a codebook, and the second CSI conforms to at least one of the following:

channel parameters recovered by a target receiver of the second CSI on the basis of the second CSI are unknown to the first node;
a generator used for generating the second CSI is obtained on the basis of training; and the second CSI does not belong to CSI defined by 3GPP R17 or CSI defined by a previous release of 3GPP R17.

2. The first node according to claim 1, wherein the first CSI is based on a Type II codebook.

3. The first node according to claim 1 or 2, wherein L vectors depend on the first CSI, V coefficient sets depend on the second CSI, and the at least one matrix depends on the L vectors and the V coefficient sets; and L is a positive integer greater than 1, L is configurable, and V is a positive integer.

4. The first node according to any one of claims 1 to 3, wherein V vector groups depend on at least one of the first CSI and the second CSI, and V is a positive integer; each vector group of the V vector groups comprises a plurality of vectors, and a number of vectors comprised in each vector group of the V vector groups is configurable; and the at least one matrix depends on the V vector groups.

5. The first node according to any one of claims 1 to 4, wherein a first vector group set depends on at least one of the first CSI and the second CSI, a number of vector groups in the first vector group set is equal to V, and V is a positive integer; a number of vectors comprised in each vector group in the first vector group set is equal to Q, Q is configurable and Q is a positive integer; and the at least one matrix depends on the first vector group set.

6. The first node according to any one of claims 1 to 5, wherein the second CSI depends on a first encoder, and the first encoder is obtained on the basis of training.

7. The first node according to any one of claims 1 to 6, wherein the first receiver receives first signaling, and the first signaling triggers a single CSI report of a first report configuration, wherein the first CSI and the second CSI both depend on the first report configuration.

8. A second node for wireless communication, comprising:

a second transmitter sending an RS in a first RS resource set; and
a second receiver receiving first CSI and second CSI, wherein at least one matrix depends on the first CSI and the second CSI, and the at least one matrix is used for precoding,
wherein the first CSI and the second CSI both depend on channel measurements obtained on the basis of the first RS resource set, the first CSI is based on a codebook, and the second CSI conforms to at least one of the following:

channel parameters recovered by the second node on the basis of the second CSI are unknown to a sender of the second CSI;
a generator used for generating the second CSI is obtained on the basis of training; and the second CSI does not belong to CSI defined by 3GPP R17 or CSI defined by a previous release of 3GPP R17.

9. The second node according to claim 8, wherein the first CSI is based on a Type II codebook.

10. The second node according to claim 8 or 9, wherein L vectors depend on the first CSI, V coefficient sets depend on the second CSI, and the at least one matrix depends on the L vectors and the V coefficient sets; and L is a positive integer greater than 1, L is configurable, and V is a positive integer.

11. The second node according to any one of claims 8 to 10, wherein V vector groups depend on at least one of the first CSI and the second CSI, and V is a positive integer; each vector group of the V vector groups comprises a plurality of vectors, and a number of vectors comprised in each vector group of the V vector groups is configurable; and the at least one matrix depends on the V vector groups.

12. The second node according to any one of claims 8 to 11, wherein a first vector group set depends on at least one of the first CSI and the second CSI, a number of vector groups in the first vector group set is equal to V, and V is a positive integer; a number of vectors comprised in each vector group in the first vector group set is equal to Q, Q is configurable and Q is a positive integer; and the at least one matrix depends on the first vector group set.

13. The second node according to any one of claims 8 to 12, wherein the second CSI depends on a first encoder, and the first encoder is obtained on the basis of training.

14. The second node according to any one of claims 8 to 13, wherein the second transmitter sends first signaling, and the first signaling triggers a single CSI report of a first report configuration, wherein the first CSI and the second CSI both depend on the first report configuration.

15. A method used in a first node for wireless communication, comprising:

receiving an RS in a first RS resource set; and sending first CSI and second CSI, wherein at least one matrix depends on the first CSI and the second CSI, and the at least one matrix is used for precoding, wherein the first CSI and the second CSI both depend on channel measurements obtained on the basis of the first RS resource set, the first CSI is based on a codebook, and the second CSI conforms to at least one of the following:

channel parameters recovered by a target receiver of the second CSI on the basis of the second CSI are unknown to the first node; a generator used for generating the second CSI is obtained on the basis of training; and the second CSI does not belong to CSI defined by 3GPP R17 or CSI defined by a previous release of 3GPP R17.

16. The method according to claim 15, wherein the first CSI is based on a Type II codebook.

17. The method according to claim 15 or 16, wherein L vectors depend on the first CSI, V coefficient sets depend on the second CSI, and the at least one matrix depends on the L vectors and the V coefficient sets; and L is a positive integer greater than 1, L is configurable, and V is a positive integer.

18. The method according to any one of claims 15 to 17, wherein V vector groups depend on at least one of the first CSI and the second CSI, and V is a positive integer; each vector group of the V vector groups comprises a plurality of vectors, and a number of vectors comprised in each vector group of the V vector groups is configurable; and the at least one matrix depends on the V vector groups.

19. The method according to any one of claims 15 to 18, wherein a first vector group set depends on at least one of the first CSI and the second CSI, a number of vector groups in the first vector group set is equal to V, and V is a positive integer; a number of vectors comprised in each vector group in the first vector group set is equal to Q, Q is configurable and Q is a positive integer; and the at least one matrix depends on the first vector group set.

20. The method according to any one of claims 15 to 19, wherein the second CSI depends on a first encoder, and the first encoder is obtained on the basis of training.

21. The method according to any one of claims 15 to 20, comprising:

receiving first signaling, wherein the first signaling triggers a single CSI report of a first report configuration, wherein the first CSI and the second CSI both depend on the first report configuration.

22. A method used in a second node for wireless communication, comprising:

sending an RS in a first RS resource set; and receiving first CSI and second CSI, wherein at least one matrix depends on the first CSI and the second CSI, and the at least one matrix is used for precoding, wherein the first CSI and the second CSI both depend on channel measurements obtained on the basis of the first RS resource set, the first CSI is based on a codebook, and the second CSI conforms to at least one of the following:

channel parameters recovered by the second node on the basis of the second CSI are unknown to a sender of the second CSI; a generator used for generating the second CSI is obtained on the basis of training; and the second CSI does not belong to CSI defined by 3GPP R17 or CSI defined by a previous release of 3GPP R17.

23. The method according to claim 22, wherein the first CSI is based on a Type II codebook.

24. The method according to claim 22 or 23, wherein L vectors depend on the first CSI, V coefficient sets depend on the second CSI, and the at least one matrix depends on the L vectors and the V coefficient sets; and L is a positive integer greater than 1, L is configurable, and V is a positive integer.

25. The method according to any one of claims 22 to 24, wherein V vector groups depend on at least one of the first CSI and the second CSI, and V is a positive integer; each vector group of the V vector groups comprises a plurality of vectors, and a number of vectors comprised in each vector group of the V vector groups is configurable; and the at least one matrix depends on the V vector groups.

26. The method according to any one of claims 22 to 25, wherein a first vector group set depends on at least one of the first CSI and the second CSI, a number of vector groups in the first vector group set is equal to V, and V is a positive integer; a number of vectors comprised in each vector group in the first vector group set is equal to Q, Q is configurable and Q is a positive integer; and the at least one matrix depends on the first vector group set.

27. The method according to any one of claims 22 to 26, wherein the second CSI depends on a first encoder, and the first encoder is obtained on the basis of training.

28. The method according to any one of claims 22 to 27, comprising:

sending first signaling, wherein the first signaling triggers a single CSI report of a first report configuration,
wherein the first CSI and the second CSI both depend on the first report configuration.

100

First node

101

Receive an RS in a first RS resource set

102

Send first CSI and second CSI

FIG.1

5GS/EPS 200

220

HSS/UDM

NG-RAN
202

201

UE

203

NR node B

211

MME/AMF/
SMF

214

Other
MME/AMF/
SMF

241

UE

204

Other NR
nodes B

212

S-GW/UPF

213

P-GW/UPF

230

Internet service

5GC/EPC
210

FIG.2

Control plane
300

L3

RRC

306

PDCP

304

305

L2

RLC

303

MAC

302

L1

PHY

301

User plane
350

SDAP

356

PDCP

354

355

L2

RLC

353

MAC

352

L1

PHY

351

FIG.3

FIG.4

FIG.5

FIG.6

FIG.7

FIG.8

FIG.9

Coefficient set #(v-1), v = 1, ⋯, V

At least one matrix

Matrix#0

Subset#0

W = 1

Subband #0        Subband #0

Or

At least one matrix

W > 1   Matrix#0  ⋯  Matrix#(W-1)

Coefficient set #(v-1), v = 1, ⋯, V

Subset #0   ⋯   Subset#(W-1)

Subband #0  ⋯ Subband#(W-1)

Subband #0  ⋯ Subband#(W-1)

FIG.10

At least one matrix

Matrix #0   ⋯   Matrix#(N3-1)

PRB group #0  ⋯ PRB group#(N3-1)

Vector#0  ⋯  Vector#(M-1)

Subset #0   ⋯   Subset#(M-1)

Vector group#(v-1),
v = 1, ⋯, V

Coefficient set#(v-1),
v = 1, ⋯, V

FIG.11

FIG.12

Matrix #(v-1) , v = 1, ⋯, V

Vector group #(v-1) , v = 1, ⋯, V

Column#0 ⋯ Column#(N3-1)

Column#(N3,(N4-1)) ⋯ Column#(N3,N4-1)

Vector #0 ⋯ Vector#(Q-1)

Group #0

Group #(N4-1)

Time window #0 ⋯ Time window #(N4-1)

FIG.13

Second CSI —— Depends on ——▶ A first encoder

FIG.14

Channel parameters recovered by a target receiver of second CSI on the basis of the second CSI —— Depend on ——▶ A first decoder

FIG.15

Second-type feedback (optional)

Second processing machine

First dataset ——▶ Third processing machine

Target first-type parameter group

First-type feedback (optional)

Second dataset ——▶ Fourth processing machine —First-type output▶ Fifth processing machine

FIG.16

First signaling —— Triggers ——▶ A single CSI report of a first report configuration

First CSI and second CSI —— Depend on ——▶ The first report configuration

FIG.17

1800

First node

First receiver
1801

First transmitter
1802

FIG.18

1900

Second node

Second transmitter
1901

Second receiver
1902

FIG.19

## INTERNATIONAL SEARCH REPORT

| | |
|---|---|
| International application No. | **PCT/CN2024/106329** |

**A. CLASSIFICATION OF SUBJECT MATTER**

H04B 7/0456(2017.01)i

According to International Patent Classification (IPC) or to both national classification and IPC

**B. FIELDS SEARCHED**

Minimum documentation searched (classification system followed by classification symbols)

IPC: H04B, H04W, H04L

Documentation searched other than minimum documentation to the extent that such documents are included in the fields searched

Electronic data base consulted during the international search (name of data base and, where practicable, search terms used)

CNTXT: CNKI; VEN; ENTXTC; 3GPP: 机器学习, 人工智能, 训练, 信道状态信息, 系数, 向量, 上报, 反馈, ML, MachineLearing, AI, Artificial Intelligence, training, CSI, coefficient, vector? , report+, feedback+

**C. DOCUMENTS CONSIDERED TO BE RELEVANT**

| Category* | Citation of document, with indication, where appropriate, of the relevant passages | Relevant to claim No. |
|---|---|---|
| X | CN 115604731 A (HUAWEI TECHNOLOGIES CO., LTD.) 13 January 2023 (2023-01-13) description, paragraphs 130-213 | 1, 2, 6-9, 13-16, 20-23, 27, 28 |
| X | CN 116418424 A (SPREADTRUM COMMUNICATIONS (SHANGHAI) CO., LTD.) 11 July 2023 (2023-07-11) description, paragraphs 79-236 | 1, 2, 6-9, 13-16, 20-23, 27, 28 |
| A | CN 115022896 A (VIVO MOBILE COMMUNICATION CO., LTD.) 06 September 2022 (2022-09-06) entire document | 1-28 |
| A | WO 2023113668 A1 (TELEFONAKTIEBOLAGET LM ERICSSON (PUBL)) 22 June 2023 (2023-06-22) entire document | 1-28 |
| A | ZTE. "R1-2203265 "CSI Enhancement for High/Medium UE Velocities and CJT"" *3GPP TSG RAN WG1 Meeting #109-E*, 29 April 2022 (2022-04-29), entire document | 1-28 |

☐ Further documents are listed in the continuation of Box C. ☑ See patent family annex.

| | | | |
|---|---|---|---|
| * | Special categories of cited documents: | "T" | later document published after the international filing date or priority date and not in conflict with the application but cited to understand the principle or theory underlying the invention |
| "A" | document defining the general state of the art which is not considered to be of particular relevance | | |
| "D" | document cited by the applicant in the international application | "X" | document of particular relevance; the claimed invention cannot be considered novel or cannot be considered to involve an inventive step when the document is taken alone |
| "E" | earlier application or patent but published on or after the international filing date | | |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | "&" | document member of the same patent family |
| "P" | document published prior to the international filing date but later than the priority date claimed | | |

| Date of the actual completion of the international search | Date of mailing of the international search report |
|---|---|
| **21 October 2024** | **22 October 2024** |

| Name and mailing address of the ISA/CN | Authorized officer |
|---|---|
| **China National Intellectual Property Administration (ISA/CN)** **China No. 6, Xitucheng Road, Jimenqiao, Haidian District, Beijing 100088** | |
| | Telephone No. |

Form PCT/ISA/210 (second sheet) (July 2022)

**INTERNATIONAL SEARCH REPORT**
Information on patent family members

International application No.

**PCT/CN2024/106329**

| Patent document cited in search report | | | Publication date (day/month/year) | Patent family member(s) | | | Publication date (day/month/year) |
|---|---|---|---|---|---|---|---|
| CN | 115604731 | A | 13 January 2023 | WO | 2023279947 | A1 | 12 January 2023 |
| | | | | EP | 4362533 | A1 | 01 May 2024 |
| CN | 116418424 | A | 11 July 2023 | WO | 2023125370 | A1 | 06 July 2023 |
| CN | 115022896 | A | 06 September 2022 | WO | 2022184010 | A1 | 09 September 2022 |
| | | | | KR | 20230138538 | A | 05 October 2023 |
| | | | | US | 2023412430 | A1 | 21 December 2023 |
| | | | | EP | 4304237 | A1 | 10 January 2024 |
| | | | | JP | 2024512358 | W | 19 March 2024 |
| WO | 2023113668 | A1 | 22 June 2023 | | None | | |

Form PCT/ISA/210 (patent family annex) (July 2022)